(19) Europäisches Patentamt
European Patent Office
Office européen des brevets

(11) EP 2 681 595 B1

(12) **EUROPEAN PATENT SPECIFICATION**

(45) Date of publication and mention of the grant of the patent:
**18.02.2015 Bulletin 2015/08**

(21) Application number: **12719103.9**

(22) Date of filing: **24.02.2012**

(51) Int Cl.:
***G02B 1/04*** *(2006.01)* ***B29D 11/00*** *(2006.01)*

(86) International application number:
**PCT/US2012/026529**

(87) International publication number:
**WO 2012/121905 (13.09.2012 Gazette 2012/37)**

# (54) PROCESS FOR PREPARING MOLDED OPTICAL ARTICLES

VERFAHREN ZUR HERSTELLUNG VON FORMGEGOSSENEN OPTISCHEN GEGENSTÄNDEN

PROCÉDÉ DE PRÉPARATION D'ARTICLES OPTIQUES MOULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2011 US 201161449123 P**
**22.02.2012 US 201213402193**

(43) Date of publication of application:
**08.01.2014 Bulletin 2014/02**

(73) Proprietor: **PPG Industries Ohio, Inc.**
**Cleveland, OH 44111 (US)**

(72) Inventors:
- **BOJKOVA, Nina, V.**
  **Monroeville, Pennsylvania 15146 (US)**
- **LUSHER, David, L.**
  **Cheswick, Pennsylvania 15024 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**EP-A1- 1 568 474** **EP-A1- 1 759 824**
**WO-A1-2007/131145**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 681 595 B1

**Description**

CROSS REFERENCE TO RELATED APPLICATIONS

This application claims the benefit of priority of United States Provisional Patent Application No. 61/449,123, filed March 4, 2011.

FIELD OF THE INVENTION

The present invention relates to processes for preparing molded optical articles that are essentially free of optical defects.

BACKGROUND OF THE INVENTION

Optical elements that provide acceptable optical qualities while maintaining durability and abrasion resistance are sought for a variety of applications, such as windshields, sunglasses, fashion lenses, non-prescription and prescription lenses, sport masks, face shields and goggles. Responsive to that need, optical elements prepared from a variety of durable organic polymers have been developed.

A number of organic polymeric materials, such as plastics, have been developed as alternatives and re13placements for glass in applications such as optical lenses, fiber optics, windows and automotive, nautical and aviation transparencies. These polymeric materials can provide advantages relative to glass including shatter resistance, lighter weight for a given application, ease of molding and ease of dyeing, as well as superior optical properties. For example, polythiourethanes have recently been introduced into the market and have been enthusiastically accepted due to their high refractive index.

Polyurethane mixing machines are commonly used for mixing the reactive components used in reaction injection molding processes to prepare polythiourethane optical articles. The mixing chambers of such devices are particularly suitable for providing adequate mixing of the reaction mixture, thus allowing for control of a consistent reaction throughout the reaction mixture.

In the production of optical lenses, in particular ophthalmic lenses, it is critical that defects such as gelled particles and flow lines be minimized for aesthetic reasons, practical reasons, and economic reasons. Homogeneous reaction mixtures must be prepared to minimize the formation of microparticles. Moreover, the extent of reaction inside the mixing chamber must be controlled so that the viscosity of the reaction mixture injected from the mixing chamber into the mold is low enough to prevent formation of flow lines in the molded article.

Thus, there is a need in the art to develop a process for preparing optical articles with high yield and minimal optical defects such as haze, flow lines and inclusions.

SUMMARY OF THE INVENTION

Provided is a process for preparing a molded optical article that is essentially free of optical defects. The process comprises:

a) providing two separate reactive components A and B from separate supply vessels;
b) introducing each of the components into a common mixing chamber having a volume of 200 ml to 2000 ml;
c) mixing the components together in the mixing chamber for a period of 50 to 200 seconds to form a reaction mixture;
d) injecting the reaction mixture at a temperature of up to 130°C into a mold;
e) holding the reaction mixture in the mold at a temperature and for a time sufficient to essentially cure the reaction mixture and form a molded optical article; and
f) releasing the article from the mold.

BRIEF DESCRIPTION OF THE DRAWING

μFigure 1 is a schematic diagram of a process for preparing molded optical polythiourethane lenses in accordance with the present invention.

DETAILED DESCRIPTION OF THE INVENTION

It is noted that, as used in this specification and the appended claims, the singular forms "a," "an," and "the" include plural referents unless expressly and unequivocally limited to one referent.

For the purposes of this specification, unless otherwise indicated, all numbers expressing quantities of ingredients, reaction conditions, and other parameters used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

All numerical ranges herein include all numerical values and ranges of all numerical values within the recited numerical ranges. Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

The various embodiments and examples of the present invention as presented herein are each understood to be non-limiting with respect to the scope of the invention.

As used in the following description and claims, the following terms have the meanings indicated below:

The terms "acrylic" and "acrylate" are used interchangeably (unless to do so would alter the intended meaning) and include acrylic acids, anhydrides, and derivatives thereof, such as their $C_1$-$C_5$ alkyl esters, lower alkyl-substituted acrylic acids, e.g., $C_1$-$C_5$ substituted acrylic acids, such as methacrylic acid, ethacrylic acid, etc., and their $C_1$-$C_5$ alkyl esters, unless clearly indicated otherwise. The terms "(meth)acrylic" or "(meth)acrylate" are intended to encompass both the acrylic/acrylate and methacrylic/methacrylate forms of the indicated material, e.g., a (meth)acrylate monomer.

The terms "oligomer" and "oligomeric" are intended to refer to compounds prepared by addition polymerization to yield a material having repeating units and having a number average molecular weight up to 5000, or up to 2000, or between 200 and 1200. The number average molecular weight may be determined by gel permeation chromatography using a polystyrene standard.

The term "curable", as used for example in connection with a curable composition, means that the indicated composition is polymerizable or cross-linkable through functional groups, e.g., by means that include, but are not limited to thermal, catalystic, electron beam, chemical free-radical initiation, and/or photoinitiation such as by exposure to ultraviolet light or other actinic radiation.

The term "cure", "cured" or similar terms, as used in connection with a cured or curable composition, e.g., a "cured composition" of some specific description, means that at least a portion of the polymerizable and/or crosslinkable components that form the curable composition is polymerized and/or crosslinked. Additionally, curing of a polymerizable composition refers to subjecting said composition to curing conditions such as but not limited to thermal curing, leading to the reaction of the reactive functional groups of the composition, and resulting in polymerization and formation of a polymerizate. When a polymerizable composition is subjected to curing conditions, following polymerization and after reaction of most of the reactive end groups occurs, the rate of reaction of the remaining unreacted reactive end groups becomes progressively slower. The polymerizable composition can be subjected to curing conditions until it is at least partially cured. The term "at least partially cured" means subjecting the polymerizable composition to curing conditions, wherein reaction of at least a portion of the reactive groups of the composition occurs, to form a polymerizate, such that said polymerizate can be demolded, and cut into test pieces, or such that it may be subjected to machining operations, including optical lens processing. The polymerizable composition can also be subjected to curing conditions such that a substantially complete cure is attained and wherein further curing results in no significant further improvement in polymer properties, such as hardness.

The term "reactive compound" refers to a compound capable of undergoing a chemical reaction with itself and/or other compounds spontaneously or upon the application of heat, actinic radiation, or in the presence of a catalyst or by any other means known to those skilled in the art.

The terms "on", "appended to", "affixed to", "bonded to", "adhered to", or terms of like import mean that the designated item, e.g., a coating, film or layer, is either directly connected to (e. g., superimposed on) the object surface, or indirectly connected to the object surface, e.g., through one or more other coatings, films or layers (superposed on).

The term "ophthalmic" refers to elements and devices that are associated with the eye and vision, such as but not limited to, lenses for eyewear, e.g., corrective and non-corrective lenses, and magnifying lenses.

The term "optical quality", as used for example in connection with polymeric materials, e.g., a "resin of optical quality" or "organic polymeric material of optical quality" means that the indicated material, e.g., a polymeric material, resin, or resin composition, is or forms a substrate, layer, film or coating that can be used as an optical article, such as an ophthalmic lens, or in combination with an optical article.

The term "rigid", as used for example in connection with an optical substrate or an optical article, means that the specified item is self-supporting; i.e., capable of maintaining its shape and supporting any applied coatings and/or films. The optical substrate itself may be in the form of a film or sheet. A rigid item may also be defined as capable of being demolded and cut into test pieces, or subjected to machining operations, without permanent deformation. Alternatively, a rigid article may be described as having a Martens hardness of at least 20 $N/mm^2$, as defined herein.

The term "optical article" means that the specified article exhibits a visible light transmittance value (transmits incident light) of at least 4 percent, such as at least 50 percent, or at least 70 percent, or at least 85 percent; and exhibits a haze value of less than 5 percent, e.g., less than 1 percent or less than 0.5 percent, when the haze value is measured at 550 nanometers by, for example, a Haze Gard Plus Instrument. Optical articles can include, but are not limited to, fiber optics, windows and automotive, nautical and aviation transparencies, lenses, optical layers, e.g., optical resin layers, optical films, such as films and/or sheets suitable for electronic displays, e.g., monitors, screens, or security elements, optical coatings, and optical substrates having a light influencing property.

The phrase "essentially free of optical defects" means that an optical article will have a rating of "Pass" on a pass/fail rating system when subjected to a standard quality test by a manufacturer.

The term "photochromic receptive" means that the indicated item has sufficient free volume to permit photochromic material(s) incorporated within it to transform from its colorless form to its colored form (and then revert to its colorless form) to the degree required for commercial optical applications.

The term "tinted", as used for example in connection with ophthalmic elements and optical substrates, means that the indicated item contains a fixed light radiation absorbing agent, such as but not limited to, conventional coloring dyes and/or pigments, infrared and/or ultraviolet light absorbing materials on or in the indicated item. The tinted item has an absorption spectrum for visible radiation that does not vary significantly in response to actinic radiation.

The term "non-tinted", as used for example in connection with ophthalmic elements and optical substrates, means that that the indicated item is substantially free of fixed light radiation absorbing agents. The non-tinted item has an absorption spectrum for visible radiation that does not vary significantly in response to actinic radiation.

The term "radiation curable" refers to compositions that may be cured by means of ionizing radiation such as electron beam, actinic radiation, and the like.

The term "actinic radiation" includes light with wavelengths of electromagnetic radiation ranging from the ultraviolet ("UV") light range, through the visible light range, and into the infrared range. Actinic radiation which can be used to cure coating compositions used in the present invention generally has wavelengths of electromagnetic radiation ranging from 150 to 2,000 nanometers (nm), from 180 to 1,000 nm, or from 200 to 500 nm. In one embodiment, ultraviolet radiation having a wavelength ranging from 10 to 390 nm can be used. Examples of suitable ultraviolet light sources include xenon arc lamps, mercury arcs, carbon arcs, low, medium or high pressure mercury lamps, swirl-flow plasma arcs and ultraviolet light emitting diodes. Suitable ultraviolet light-emitting lamps are medium pressure mercury vapor lamps having outputs ranging from 200 to 600 watts per inch (79 to 237 watts per centimeter) across the length of the lamp tube.

The term "transparent", as used for example in connection with a substrate, film, material and/or coating, means that the indicated substrate, coating, film and/or material has the property of transmitting light without appreciable scattering so that objects lying beyond are entirely visible.

The present invention provides a process for preparing a molded optical article that is essentially free of optical defects. The process comprises:

a) introducing each of two separate reactive components A and B from separate supply vessels into a mixing chamber having a volume of 200 ml to 2000 ml;
b) mixing the components together in the mixing chamber for a period of 50 to 200 seconds to form a reaction mixture;
c) injecting the reaction mixture at a temperature of up to 130°C into a mold;
d) holding the reaction mixture in the mold at a temperature and for a time sufficient to essentially cure the reaction mixture and form a molded optical article; and
e) releasing the article from the mold.

In the process of the present invention, each of two separate reactive components A and B, described in more detail below, is delivered from separate supply vessels into a mixing chamber. The mixing chamber typically has a volume of 200 ml to 2000 ml, often 200 to 300 ml. Such a mixing chamber is larger than those conventionally used to prepare polyurethanes and polythiourethanes for optical lens production. The conventional mixing chambers have capacities less than 200 ml, usually less than 150 ml, contributing to incomplete conversion of the reactants unless long residence times are used. Longer residence times coupled with the smaller capacity result in lower productivity, which increases production costs. When higher catalyst levels are used to compensate for the poor conversions, gelling occurs and the reaction product often cannot be molded effectively, rendering it unacceptable. Each of the components A and B can be degassed (e.g. under vacuum) prior to mixing them and carrying out the reaction, typically a polymerization. The components can be mixed using a variety of methods and equipment, such as but not limited to an impeller or extruder, provided it meets the capacity specifications above.

The components are mixed together in the mixing chamber for a residence time of 50 to 200 seconds, usually at least 70 seconds. Residence times longer than 200 seconds can lead to an undesirably high viscosity as the reaction

product continues to form, making it difficult to inject the reaction product into a mold.

The reaction mixture typically undergoes an exothermic reaction, and after mixing it is introduced, usually by injection, into a mold. The temperature of the reaction mixture as it is introduced into the mold is usually up to 130°C, often up to 120°C. The reaction mixture is held in the mold at a temperature and for a time sufficient to essentially cure the reaction mixture and form a molded optical article, The mold may have any shape desired for the final product. It is typically a lens mold; often a mold for an ophthalmic lens. The molded article may then be released from the mold. Optical articles prepared by the process of the present invention demonstrate high yield, high transparency, very low haze, low flow lines and low inclusions.

In particular embodiments of the present invention, reactive component A comprises a material having functional groups that are reactive with active hydrogens, and reactive component B comprises:

(a) a thioether-functional, oligomeric polythiol prepared by reacting together:

(1) a compound having at least two thiol functional groups;
(2) a compound having triple bond functionality; and optionally
(3) a compound having at least two double bonds;

(b) an organotin catalyst present in an amount less than 300 ppm and a tertiary amine catalyst present in an amount less than 1000 ppm, based on the total weight of the reaction mixture; and, optionally
(c) a compound different from (a) containing active hydrogens.

The thioether-functional, oligomeric polythiol (a) used in component B may be prepared by reacting together:

(1) a compound having at least two thiol functional groups; and
(2) a compound having triple bond functionality.

The compound (2) having triple bond functionality may comprise any known alkyne, for example, propargyl alcohol, propargyl chloride, propargyl bromide, propargyl acetate, propargyl propionate, propargyl benzoate, phenyl acetylene, phenyl propargyl sulfide, 1,4-dichloro-2-butyne, 2-butyne-1,4-diol, 3-butyne-2-ol, 2-pentyne, 1-hexyne, 2-hexyne, 3-hexyne, 3-hexyne-2,5-diol, and/or mixtures thereof.

The thioether-functional, oligomeric polythiol (a) used in component B may have pendant hydroxyl functional groups and may be prepared by reacting together:

(1) a compound having at least two thiol functional groups; and
(2) a hydroxyl functional compound having triple bond functionality.

The compound (1) having at least two thiol functional groups may comprise a polythiol, i.e., a dithiol, a compound having more than two thiol functional groups (a higher polythiol), or a mixture thereof. Such mixtures may include mixtures of dithiols, mixtures of higher polythiols or mixtures of dithiols and higher polythiols. The thiol functional groups are typically terminal groups, though a minor portion (e.g., less than 50 percent of all groups) may be pendant along a chain. The compound (1) may additionally contain a minor portion of other active hydrogen functionality (i. e., different from thiol), for example, hydroxy functionality. The compound (a) may be linear or branched, and may contain cyclic, alkyl, aryl, aralkyl, or alkaryl groups.

The compound (1) can be selected so as to produce a substantially linear oligomeric polythiol. Therefore, when the compound (1) comprises a mixture of a dithiol and a compound having more than two thiol functional groups, the compound having more than two thiol functional groups can be present in an amount up to 10 percent by weight of the mixture.

Suitable dithiols can include linear or branched aliphatic, cycloaliphatic, aromatic, heterocyclic, polymeric, oligomeric dithiols and mixtures thereof. The dithiol can comprise a variety of linkages including but not limited to ether linkages (-O-), sulfide linkages (-S-), polysulfide linkages ($-S_x-$, wherein x is at least 2, or from 2 to 4), ester linkages, amide linkages and combinations of such linkages.

Non-limiting examples of suitable dithiols for use in the present invention can include but are not limited to 2,5-dimercaptomethyl-1,4-dithiane, dimercaptodiethylsulfide (DMDS), ethanedithiol, 3,6-dioxa-1,8-octanedithiol, ethylene glycol di(2-mercaptoacetate), ethylene glycol di(3-mercaptopropionate), poly(ethylene glycol) di(2-mercaptoacetate) and poly(ethylene glycol) di(3-mercaptopropionate), benzenedithiol, 4-tert-butyl-1,2-benzenedithiol, 4,4'-thiodibenzenethiol, and mixtures thereof.

The dithiol may include dithiol oligomers having disulfide linkages such as materials represented by the following graphic formula I:

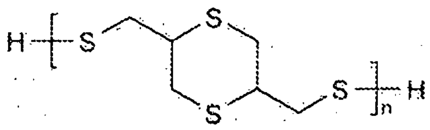

(I)

wherein n can represent an integer from 1 to 21.

Dithiol oligomers represented by Formula I can be prepared, for example, by the reaction of 2,5-dimeracaptomethyl-1,4-dithiane with sulfur in the presence of basic catalyst, as known in the art.

The nature of the SH group in polythiols is such that oxidative coupling can occur readily, leading to formation of disulfide linkages. Various oxidizing agents can lead to such oxidative coupling. The oxygen in the air can in some cases lead to such oxidative coupling during storage of the polythiol. It is believed that a possible mechanism for the oxidative coupling of thiol groups involves the formation of thiyl radicals, followed by coupling of said thiyl radicals, to form disulfide linkage. It is further believed that formation of disulfide linkage can occur under conditions that can lead to the formation of thiyl radical, including but not limited to reaction conditions involving free radical initiation. The polythiols suitable for use as compound (1) in the preparation of the oligomeric polythiols (a) used in component B in the process of the present invention can include species containing disulfide linkages formed during storage. The polythiols suitable for use as compound (1) in the preparation of any of the oligomeric polythiols used in component B in the present invention also can include species containing disulfide linkages formed during synthesis of the polythiol.

In certain embodiments, the dithiol suitable for use in the present invention, can include at least one dithiol represented by the following graphic formulas:

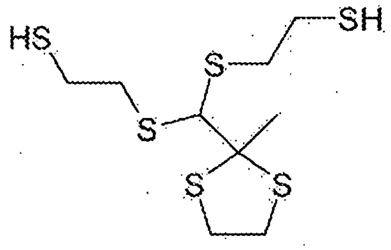

(II)

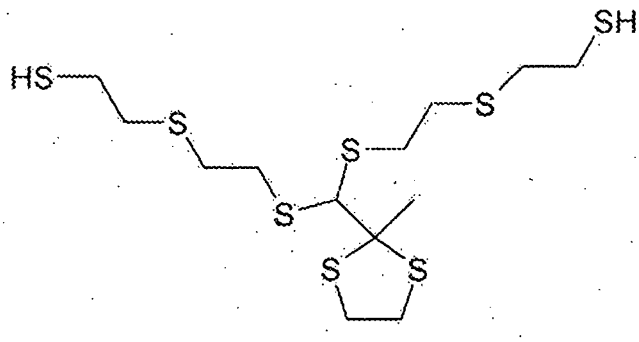

(III)

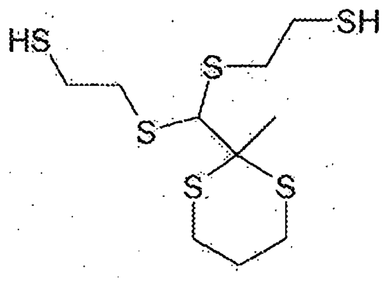

(IV)

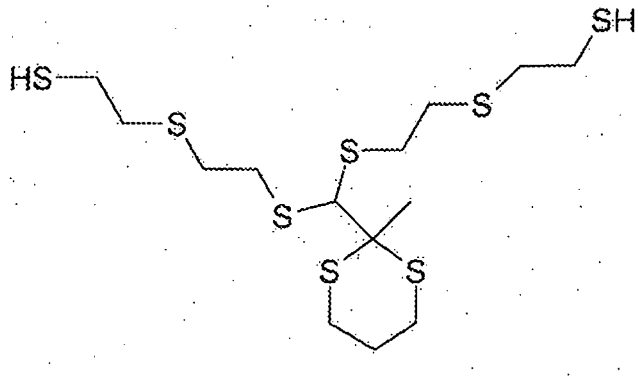

(V)

The sulfide-containing dithiols comprising 1,3-dithiolane (e.g., formulas II and III) or 1,3-dithiane (e.g., formulas IV and V) can be prepared by reacting asym-dichloroacetone with dimercaptan, and then reacting the reaction product

with dimercaptoalkylsulfide, dimercaptan or mixtures thereof, as described in U. S. Patent 7,009,032 B2.

Non-limiting examples of suitable dimercaptans for use in the reaction with asym-dichloroacetone can include but are not limited to materials represented by the following formula VI:

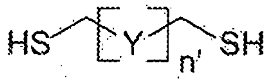

(VI)

wherein Y can represent $CH_2$ or $(CH_2\text{-}S\text{-}CH_2)$, and n' can be an integer from 0 to 5. The dimercaptan suitable for reaction with asym-dichloroacetone in the present invention can be chosen from, for example, ethanedithiol, propanedithiol, and mixtures thereof.

The amount of asym-dichloroacetone and dimercaptan suitable for carrying out the above reaction can vary. For example, asym-dichloroacetone and dimercaptan can be present in the reaction mixture in an amount such that the molar ratio of dichloroacetone to dimercaptan can be from 1:1 to 1:10.

Suitable temperatures for reacting asym-dichloroacetone with dimercaptan can vary, often ranging from 0 to 100°C.

Non-limiting examples of suitable dimercaptans for use in the reaction with the reaction product of the asym-dichloroacetone and dimercaptan, can include but are not limited to materials represented by the above general formula VI, aromatic dimercaptans, cycloalkyl dimercaptans, heterocyclic dimercaptans, branched dimercaptans, and mixtures thereof.

Non-limiting examples of suitable dimercaptoalkylsulfides for use in the reaction with the reaction product of the asym-dichloroacetone and dimercaptan, can include but are not limited to materials represented by the following formula:

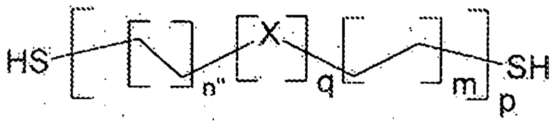

(VII)

wherein X can represent O, S or Se, n" can be an integer from 0 to 10, m can be an integer from 0 to 10, p can be an integer from 1 to 10, q can be an integer from 0 to 3, and with the proviso that (m + n") is an integer from 1 to 20.

Non-limiting examples of suitable dimercaptoalkylsulfides for use in the present invention can include branched dimercaptoalkylsulfides.

The amount of dimercaptan, dimercaptoalkylsulfide, or mixtures thereof, suitable for reacting with the reaction product of asym-dichloroacetone and dimercaptan, can vary. Typically, dimercaptan, dimercaptoalkylsulfide, or a mixture thereof, can be present in the reaction mixture in an amount such that the equivalent ratio of reaction product to dimercaptan, dimercaptoalkylsulfide, or a mixture thereof, can be from 1:1.01 to 1:2. Moreover, suitable temperatures for carrying out this reaction can vary within the range of from 0 to 100°C.

The reaction of asym-dichloroacetone with dimercaptan can be carried out in the presence of an acid catalyst. The acid catalyst can be selected from a wide variety known in the art, such as but not limited to Lewis acids and Bronsted acids. Non-limiting examples of suitable acid catalysts can include those described in Ullmann's Encyclopedia of Industrial Chemistry, 5th Edition, 1992, Volume A21, pp. 673 to 674. The acid catalyst is often chosen from boron trifluoride etherate, hydrogen chloride, toluenesulfonic acid, and mixtures thereof. The amount of acid catalyst can vary from 0.01 to 10 percent by weight of the reaction mixture.

The reaction product of asym-dichloroacetone and dimercaptan can alternatively be reacted with dimercaptoalkylsulfide, dimercaptan or mixtures thereof, in the presence of a base. The base can be selected from a wide variety known in the art, such as but not limited to Lewis bases and Bronsted bases. Non-limiting examples of suitable bases can include those described in Ullmann's Encyclopedia of Industrial Chemistry, 5th Edition, 1992, Volume A21, pp. 673 to 674. The base is often sodium hydroxide. The amount of base can vary. Typically, a suitable equivalent ratio of base to reaction product of the first reaction, can be from 1:1 to 10:1.

The reaction of asym-dichloroacetone with dimercaptan can be carried out in the presence of a solvent. The solvent can be selected from but is not limited to organic solvents. Non-limiting examples of suitable solvents can include but are not limited to chloroform, dichloromethane, 1,2-dichloroethane, diethyl ether, benzene, toluene, acetic acid and mixtures thereof.

In another embodiment, the reaction product of asym-dichloroacetone and dimercaptan can be reacted with dimercaptoalkylsulfide, dimercaptan or mixtures thereof, in the presence of a solvent, wherein the solvent can be selected from but is not limited to organic solvents. Non-limiting examples of suitable organic solvents can include alcohols such as but not limited to methanol, ethanol and propanol; aromatic hydrocarbon solvents such as but not limited to benzene, toluene, xylene; ketones such as but not limited to methyl ethyl ketone; water; and mixtures thereof.

The amount of solvent can widely vary, from 0 to 99 percent by weight of the reaction mixtures. Alternatively, the reactions can be carried out neat, i.e., without solvents.

The reaction of asym-dichloroacetone with dimercaptan can also be carried out in the presence of a dehydrating reagent. The dehydrating reagent can be selected from a wide variety known in the art. Suitable dehydrating reagents for use in this reaction can include but are not limited to magnesium sulfate. The amount of dehydrating reagent can vary widely according to the stoichiometry of the dehydrating reaction.

The compound (1) having at least two thiol functional groups, used to prepare the oligomeric polythiols in component B, can be prepared in certain non-limiting embodiments by reacting 2-methyl-2-dichloromethyl-1,3-dithiolane with dimercaptodiethylsulfide to produce dimercapto-1,3-dithiolane derivative of formula III. Alternatively, 2-methyl-2-dichloromethyl-1,3-dithiolane can be reacted with 1,2-ethanedithiol to produce dimercapto-1,3-dithiolane derivative of formula II. 2-methyl-2-dichloromethyl-1,3-dithiane can be reacted with dimercaptodiethylsulfide to produce dimercapto-1,3-dithiane derivative of formula V. Also, 2-methyl-2-dichloromethyl-1,3-dithiane can be reacted with 1,2-ethanedithiol to produce dimercapto-1,3-dithiane derivative of formula IV.

Another non-limiting example of a dithiol suitable for use as compound (1) in the preparation of the oligomeric polythiol in component B can include at least one dithiols oligomer prepared by reacting dichloro derivative with dimercaptoalkylsulfide as follows in Reaction Scheme A;

Reaction Scheme A

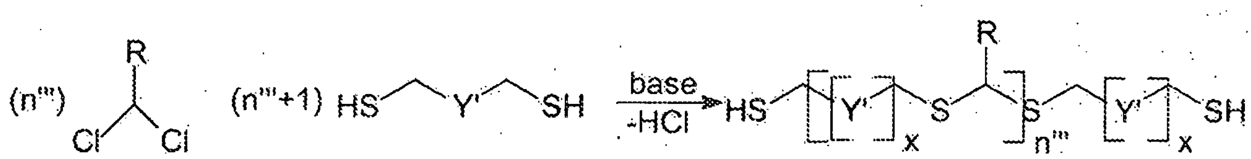


wherein R can represent $CH_3$, $CH_3CO$, $C_1$ to $C_{10}$ alkyl, cycloalkyl, aryl alkyl, or alkyl-CO; Y' can represent $C_1$ to $C_{10}$ alkyl, cycloalkyl, $C_6$ to $C_{14}$ aryl, $(CH_2)_{p'}(S)_{m'}(CH_2)_{q'}$, $(CH_2)_{p'}(Se)_{m'}(CH_2)_{q'}$, $(CH_2)_{p'}(Te)_{m'}(CH_2)_{q'}$ wherein m' can be an integer from 1 to 5 and, p' and q' can each be an integer from 1 to 10; n''' can be an integer from 1 to 20; and x can be an integer from 0 to 10.

The reaction of dichloro derivative with dimercaptoalkylsulfide can be carried out in the presence of a base. Suitable bases include any known to those skilled in the art in addition to those disclosed above.

The reaction of dichloro derivative with dimercaptoalkylsulfide may be carried out in the presence of a phase transfer catalyst. Suitable phase transfer catalysts for use in the present invention are known and varied. Non-limiting examples can include but are not limited to tetraalkylammonium salts and tetraalkylphosphonium salts. This reaction is often carried out in the presence of tetrabutylphosphonium bromide as phase transfer catalyst. The amount of phase transfer catalyst can vary widely, for example, from 0 to 50 equivalent percent, or from 0 to 10 equivalent percent, or from 0 to 5 equivalent percent, relative to the dimercaptosulfide reactants.

The compound (1) having at least two thiol functional groups may further contain hydroxyl functionality. Non-limiting examples of suitable materials having both hydroxyl and multiple (more than one) thiol groups can include but are not limited to glycerin bis(2-mercaptoacetate), glycerin bis(3-mercaptopropionate), 1,3-dimercapto-2-propanol, 2,3-dimercapto-1-propanol, trimethylolpropane bis(2-mercaptoacetate), trimethylolpropane bis(3-mercaptopropionate), pentaerythritol bis(2-mercaptoacetate), pentaerythritol tris(2-mercaptoacetate), pentaerythritol bis(3-mercaptopropionate), pentaerythritol tris(3-mercaptopropionate), and mixtures thereof.

In addition to dithiols disclosed above, particular examples of suitable dithiols for use as or in preparing the compound (1) can include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentehedimercaptan, ethylcyclohexyldithiol (ECHDT), dimercaptodiethylsulfide (DMDS), methyl-substituted dimercaptodiethylsulfide, dimethyl-substituted dimercaptodiethylsulfide, 3,6-dioxa-1,8-octanedithiol, 1,5-dimercapto-3-oxapentane, 2,5-dimercaptomethyl-1,4-dithiane (DMMD), ethylene glycol di(2-mercaptoacetate), ethylene glycol di(3-mercaptopropionate), and mixtures thereof.

Suitable trifunctional or higher-functional polythiols for use as or in the preparation of compound (1) can be selected from a wide variety known in the art. Non-limiting examples can include pentaerythritol tetrakis(2-mercaptoacetate), pentaerythritol tetrakis(3-mercaptopropionate), trimethylolpropane tris(2-mercaptoacetate), trimethylolpropane

tris(3-mercaptopropionate), and/or thioglycerol bis(2-mercaptoacetate).

For example, the polythiol can be chosen from materials represented by the following formula VIII,

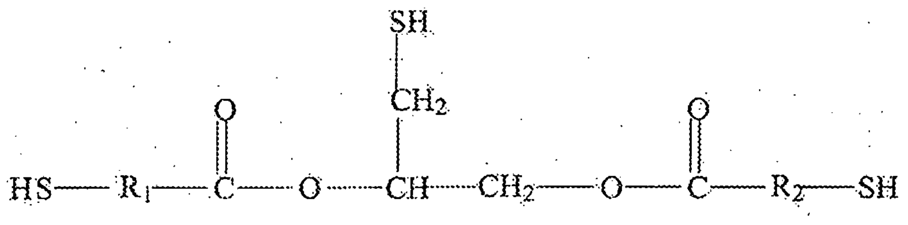

(VIII)

wherein $R_1$ and $R_2$ can each be independently chosen from straight or branched chain alkylene, cyclic alkylene, phenylene and $C_1$-$C_9$ alkyl substituted phenylene. Non-limiting examples of straight or branched chain alkylene can include methylene, ethylene, 1,3-propylene, 1,2-propylene, 1,4-butylene, 1,2-butylene, pentylene, hexylene, heptylene, octylene, nonylene, decylene, undecylene, octadecylene and icosylene. Non-limiting examples of cyclic alkylenes can include cyclopentylene, cyclohexylene, cycloheptylene, cyclooctylene, and alkyl-substituted derivatives thereof. The divalent linking groups $R_1$ and $R_2$ can be chosen from methylene, ethylene, phenylene, and alkyl-substituted phenylene, such as methyl, ethyl, propyl, isopropyl and nonyl substituted phenylene.

In particular embodiments, the compound (1) having at least two thiol functional groups may be prepared by reacting together any of the dithiols mentioned above, and a compound having at least two double bonds (for example, a diene). Such compounds having at least two double bonds are described in more detail below, as are reaction methods.

The compound (2) having triple bond functionality, used to prepare the oligomeric polythiols (a) used in component B in the present invention, may comprise any alkyne known to those skilled in the art as noted above. In the preparation of the thioether-functional oligomeric polythiols having pendant hydroxyl functional groups, the compound (2) may comprise any hydroxyl functional alkyne known in the art such as those described immediately below. Because a triple bond can react twice with a thiol functional group, for the purposes of the present invention, a triple bond is understood to be equal to two equivalents of a double bond when determining reaction stoichiometry.

Suitable non-limiting examples of hydroxyl functional compounds having triple bond functionality include propargyl alcohol, 2-butyne-1,4-diol, 3-butyne-2-ol, 3-hexyne-2,5-diol, and/or mixtures thereof. A portion of the hydroxyl functional groups on the compound (2) may be esterified. For example, a portion of the compound (2) may comprise an alkyne-functional ester of a $C_1$-$C_{12}$ carboxylic acid such as propargyl acetate, propargyl propionate, propargyl benzoate, and the like. Moreover, in the preparation of the thioether-functional, oligomeric polythiols having pendant hydroxyl groups, a portion of the triple bond-containing compound (2) can comprise, in addition to the hydroxyl functional, triple bond-containing compound, a triple-bond-containing compound which contains no hydroxyl functional groups such as those described hereinbelow.

In the preparation of the oligomeric polythiol of the present invention, the ratio of thiol functional groups in compound (1) to triple bonds in compound (2) typically ranges from 1.01:1 to 2.0:1, such as 1:3:1 to 2.0:1, and 1.5:1 to 2,0:1. In some instances the presence of an excess of thiol functional groups may be desirable during the reaction as well as in the reaction product as unreacted compound (1). For example, the presence of excess thiol present during the reaction may enhance the reaction rate. Also unreacted thiol, e.g., in the form of unreacted compound (1), can be present in the final reaction product and thus available to subsequently react with, for example, a reactive compound having functional groups reactive with active hydrogens (such as are described below). Thus, in an embodiment of the present invention the reaction ratio of thiol functional groups in the compound (1) to triple bonds in the compound (2) can range from 1.01:1 to 20:1, such as 1.01:1 to 10:1, or 1.01:1 to 5:1, or 1.5:1 to 5:1; or 1.5:1 to 3:1.

To prepare the oligomeric polythiols used in the present invention, the reaction of the compound (1) with triple bond-containing compounds (2) can be carried out in the presence of radical initiator. Suitable radical initiators for use in the present invention can vary widely and can include those known to one of ordinary skill in the art. Non-limiting examples of radical initiators can include but are not limited to azo or peroxide type free-radical initiators such as azobisalkalenenitriles. The free-radical initiator can be azobisalkalenenitrile which is commercially available from DuPont under the trade name VAZO™. VAZO-52, VAZO-64, VAZO-67, VAZO-88 and mixtures thereof can also be used as radical initiators.

Selection of the free-radical initiator can depend on reaction temperature. The reaction temperature can vary, for example, from room temperature to 120°C. VAZO 52 can be used at a temperature of from 50-60 °C. VAZO 64 and VAZO 67 can be used at a temperature of 60-100 °C, and VAZO 88 can be used at a temperature of 70-120°C.

The amount of free radical initiator used in the reaction of the present invention can vary widely and can depend on the free radical initiator selected. Typically, the free radical initiator is present in an amount of from 0.01% by weight

to 5% by weight of the reaction mixture.

The reaction of the compound (1) with triple bond-containing compounds (2) can be carried out under a variety of reaction conditions. Such conditions can depend on the degree of reactivity of the triple bond containing compound and the desired structure of the resulting polythiol oligomer. In one reaction scheme, the reactants and a radical initiator can be combined together while heating the mixture. Alternatively, triple bond containing-compounds can be added in relatively small amounts over a period of time to a mixture of polythiol and radical initiator at a certain temperature. Also, triple bond containing-compounds can be combined with the compound (1) having at least two thiol functional groups in a stepwise manner under radical initiation. Also, the radical initiator can be dissolved in the triple bond-containing compound (2), and the resulting solution can be added dropwise to the compound (1).

The thioether-functional, oligomeric polythiol (a) may alternatively be prepared by reacting together:

(1) a compound having at least two thiol functional groups such as any of those described above;
(2) a compound having triple bond functionality such as any of those described above; and
(3) a compound having at least two double bonds.

The compound (1) having at least two thiol functional groups may be any of the previously mentioned thioether-functional, oligomeric polythiols, including those described above, prepared in accordance with the present invention. For example, the compound (1) may comprise a reaction product of any of the dithiols mentioned above, and a compound having at least two double bonds, which may be the same as or different from the compound (3). The compound (2) can be any of the previously mentioned compounds having triple bond functionality, including the hydroxyl functional compounds having triple bond functionality.

The compound (3) having at least two double bonds can be chosen from non-cyclic dienes, including straight chain and/or branched aliphatic non-cyclic dienes, non-aromatic ring-containing dienes, including non-aromatic ring-containing dienes wherein the double bonds can be contained within the ring or not contained within the ring or any combination thereof, and wherein the non-aromatic ring-containing dienes can contain non-aromatic monocyclic groups or non-aromatic polycyclic groups or combinations thereof; aromatic ring-containing dienes; or heterocyclic ring-containing dienes; or dienes containing any combination of such non-cyclic and/or cyclic groups. The dienes can optionally contain thioether, disulfide, polysulfide, sulfone, ester, thioester, carbonate, thiocarbonate, urethane, or thiourethane linkages, or halogen substituents, or combinations thereof; with the proviso that the dienes contain at least some double bonds capable of undergoing reaction with SH groups of a polythiol, and forming covalent C-S bonds. Often the compound (3) having at least two double bonds comprises a mixture of dienes that are different from one another.

The compound (3) having at least two double bonds may comprise acyclic non-conjugated dienes, acyclic polyvinyl ethers, allyl-(meth)acrylates vinyl-(meth)acrylates, di(meth)acrylate esters of diols, di(meth)acrylate esters of dithiols, di(meth)acrylate esters of poly(alkyleneglycol) diols, monocyclic non-aromatic dienes, polycyclic non-aromatic dienes, aromatic ring-containing dienes, diallyl esters of aromatic ring dicarboxylic acids, divinyl esters of aromatic ring dicarboxylic acids, and/or mixtures thereof.

Non-limiting examples of acyclic non-conjugated dienes can include those represented by the following formula IX:

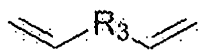

(IX)

wherein $R_3$ can represent $C_1$ to $C_{30}$ linear or branched divalent saturated alkylene radical, or $C_2$ to $C_{30}$ divalent organic radical including groups such as but not limited to those containing ether, thioether, ester, thioester, ketone, polysulfide, sulfone and combinations thereof. The acyclic non-conjugated dienes can be selected from 1,5-hexadiene, 1,6-heptadiene, 1,7-octadiene and mixtures thereof.

Non-limiting examples of suitable acyclic polyvinyl ethers can include those represented by the following formula X:

$$CH2{=}CH{-}{-}O{-}{-}{-}({-}{-}{-}R_4{-}O{-}{-}{-})_{m''}{-}{-}{-}CH{=}CH_2 \qquad (X)$$

wherein $R_4$ can be $C_2$ to $C_6$ n-alkylene, $C_3$ to $C_6$ branched alkylene group, or $--[(CH_2--)_{p''} --O--]_{q''} --(--CH_2--)_{r'} --$, m" can be a rational number from 0 to 10, often 2; p" can be an integer from 2 to 6, q" can be an integer from 1 to 5 and r' can be an integer from 2 to 10.

Non-limiting examples of suitable polyvinyl ether monomers for use can include divinyl ether monomers, such as ethylene glycol divinyl ether, diethylene glycol divinyl ether, triethyleneglycol divinyl ether, and mixtures thereof.

Di(meth)acrylate esters of linear diols can include ethanediol di(meth)acrylate, 1,3-propanediol dimethacrylate, 1,2-propanediol di(meth)acrylate, 1,4-butanediol di(meth)acrylate, 1,3-butanediol di(meth)acrylate, 1,2-butanediol di(meth)acrylate, and mixtures thereof.

Di(meth)acrylate esters of dithiols can include, for example, di(meth)acrylate of 1,2-ethanedithiol including oligomers thereof, di(meth)acrylate of dimercaptodiethyl sulfide (i.e., 2,2'-thioethanedithiol di(meth)acrylate) including oligomers thereof, di(meth)acrylate of 3,6-dioxa-1,8-octanedithiol including oligomers thereof, di(meth)acrylate of 2-mercaptoethyl ether including oligomers thereof, di(meth)acrylate of 4,4'-thiodibenzenethiol, and mixtures thereof.

Further non-limiting examples of suitable dienes can include monocyclic aliphatic dienes such as those represented by the following graphic formula XI:

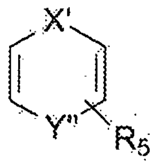

(XI)

wherein X' and Y" each independently can represent $C_{1-10}$ divalent saturated alkylene radical; or $C_{1-5}$ divalent saturated alkylene radical, containing at least one element selected from the group of sulfur, oxygen and silicon in addition to the carbon and hydrogen atoms; and $R_5$ can represent H, or $C_1$-$C_{10}$ alkyl; and those represented by the following graphic formula XII:

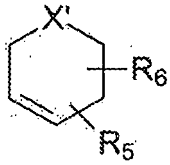

(XII)

wherein X' and $R_5$ can be as defined above and $R_6$ can represent $C_2$-$C_{10}$ alkenyl. The monocyclic aliphatic dienes can include 1,4-cyclohexadiene, 4-vinyi-1-cyclohexene, dipentene and terpinene.

Non-limiting examples of polycyclic aliphatic dienes can include 5-vinyl-2-norbornene; 2,5-norbornadiene; dicyclopentadiene and mixtures thereof.

Non-limiting examples of aromatic ring-containing dienes can include those represented by the following graphic formula XIII:

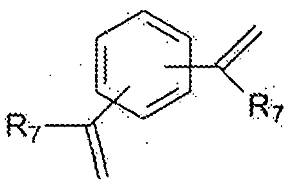

(XIII)

wherein $R_4$ can represent hydrogen or methyl. Aromatic ring-containing dienes can include monomers such as diisopropenyl benzene, divinyl benzene and mixtures thereof.

Examples of diallyl esters of aromatic ring dicarboxylic acids can include but are not limited to those represented by the following graphic formula XIV:

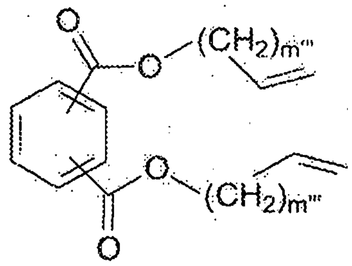

(XIV)

wherein each m''' independently can be an integer from 0 to 5. The diallyl esters of aromatic ring dicarboxylic acids can include o-diallyl phthalate, m-diallyl phthalate, p-diallyl phthalate and mixtures thereof.

Often, the compound (3) having at least two double bonds comprises 5-vinyl-2-norbornene, ethylene glycol divinyl ether, diethylene glycol divinyl ether, triethylene glycol divinyl ether, butane diol divinyl ether, vinylcyclohexene, 4-vinyl-1-cyclohexene, dipentene, terpinene, dicyclopentadiene, cyclododecadiene, cyclooctadiene, 2-cyclopenten-1-yl-ether, 2,5-norbornadiene, divinylbenzene including 1,3-divinylbenzene, 1,2- divinylbenzene, and 1,4- divinylbenzene, diisopropenylbenzene including 1,3-diisopropenylbenzene, 1,2-diisopropenylbenzene, and 1,4- diisopropenylbenzene, allyl (meth)acrylate, ethanediol di(meth)acrylate, 1,3-propanediol di(meth)acrylate, 1,2-propanediol di(meth)acrylate, 1,3-butanediol di(meth)acrylate, 1,2-butanediol di(meth)acrylate, ethylene glycol di(meth)acrylate, diethylene glycol di(meth)acrylate, dimercaptodiethylsulfide di(meth)acrylate, 1,2-ethanedithiol di(meth)acrylate, and/or mixtures thereof.

Other non-limiting examples of suitable di(meth)acrylate monomers can include ethylene glycol di(meth)acrylate, 1,3-butylene glycol di(meth)acrylate, 1,4-butanediol di(meth)acrylate, 2,3-dimethyl-1,3-propanediol di(meth)acrylate, 1,6-hexanediol di(meth)acrylate, propylene glycol di(meth)acrylate, dipropylene glycol di(meth)acrylate, tripropylene glycol di(meth)acrylate, tetrapropylene glycol di(meth)acrylate, ethoxylated hexanediol di(meth)acrylate, propoxylated hexanediol di(meth)acrylate, neopentyl glycol di(meth)acrylate, alkoxylated neopentyl glycol di(meth)acrylate, hexylene glycol di(meth)acrylate, diethylene glycol di(meth)acrylate, polyethylene glycol di(meth)acrylate, thiodiethyleneglycol di(meth)acrylate, triethylene glycol di(meth)acrylate, triethylene glycol di(meth)acrylate, alkoxylated hexanediol di(meth)acrylate, alkoxylated neopentyl glycol di(meth)acrylate, pentanediol di(meth)acrylate, cyclohexane dimethanol di(meth)acrylate, and ethoxylated bis-phenol A di(meth)acrylate.

For purposes of the present invention in the preparation of any of the oligomeric polythiols comprising reactants (1), (2), and (3), the reactants (1), (2), and (3) may all be reacted together simultaneously (as in a "one pot" process) or mixed together incrementally in various combinations. For example, compound (1) having at least two thiol functional groups may be reacted first with the compound (2) having triple bond functionary in a first reaction vessel to produce a first reaction product, followed by addition of the compound (3) having at least two double bonds to the reaction mixture to react with the first reaction product and yield the oligomeric polythiol (a) (or addition of the first reaction product to a second reaction vessel containing the compound (3)). As an alternative, the compound (1) may be reacted first with the compound (3) having at least two double bonds to produce a first reaction product, followed by addition of the compound (2) to yield the oligomeric polythiol. In this embodiment, one may optionally add, simultaneously with or after compound (2), an additional compound (3) having at least two double bonds, which may be the same as or different from that reacted earlier with compound (1) to form the first reaction product.

When the compound (1) is combined first with the compound (3), it is believed that they react via a thiol-ene type reaction of the SH groups of (1) with double bond groups of (3). Such reactions may typically take place in the presence of a radical initiator as mentioned above, or in the presence of a base catalyst, particularly when the compound (3) comprises a compound having at least one

(meth)acrylate type double bonds. Suitable base catalysts for use in this reaction can vary widely and can be selected from those known in the art. Non-limiting examples can include tertiary amine bases such as 1,8-diazabicyclo[5,4.0]undoc-7-ene (DBU) and N,N-dimethylbenzylamine. The amount of base catalyst used can vary widely, but typically it is present in an amount of from 0.001 to 5.0% by weight of the mixture of (1) and (3).

The stoichiometric ratio of the sum of the number of thiol equivalents of all polythiols present (compound (1)) to the sum of the number of equivalents of all double bonds present (including alkyne functionality effective as two double bond equivalents as discussed above) is greater than 1:1. In non-limiting embodiments, said ratio can be within the range of from greater than 1:1 to 3:1, or from 1.01:1 to 3:1, or from 1.01:1 to 2:1, or from 1.05:1 to 2:1, or from 1.1:1 to 1.5:1, or from 1.25:1 to 1.5:1.

Various methods of reacting polyvinyl ether monomers and one or more dithiol materials are described in detail in United States Patent No. 6,509,418B1, column 4, line 52 through column 8, line 25, which disclosure is herein incorporated by reference. Various methods of reacting allyl sulfide and dimercaptodiethylsulfide are described in detail

in WO 03/042270, page 2, line 16 to page 10, line 7, which disclosure is incorporated herein by reference. Various methods for reacting a dithiol and an aliphatic, ring-containing non-conjugated diene in the presence of free radical initiator are described in detail in WO/01/66623A1, from page 3, line 19 to page 6, line 11, the disclosure of which is incorporated herein by reference.

In reacting the compounds (1) and (3), it may be advantageous to use one or more free radical initiators. Non-limiting examples of suitable free radical initiators can include azo compounds, such as those described above; organic peroxides such as but not limited to benzoyl peroxide and t-butyl peroxide; inorganic peroxides; and similar free-radical generators.

Alternately, the reaction of compounds (1) and (3) can be effected by irradiation with ultraviolet light either with or without a photoinitiating moiety.

The mixture of (1) and (3) can be reacted for a time period of from 1 hour to 5 days and at a temperature of from 20 °C to 100 °C. Often, the mixture is heated until a predetermined theoretical value for SH content is achieved.

The stoichiometric ratio of the sum of the number of equivalents of triple bond functional groups in compound (2) to the sum of the number of equivalents of double bonds in compound (3) is often within the range of from 0.01:0.99 to 1.00:0, or from 0.10:0.90 to 1.00:0, or from 0.20:0.80 to 1.00:0.

Any of the thioether-functional, oligomeric polythiols described herein, when reacted with a reactive compound having functional groups that are reactive with active hydrogens in accordance with the process of the present invention, can produce a polymerizate having a refractive index of at least 1.50, or at least 1.52, or at least 1.55, or at least 1.60, or at least 1.65, or at least 1.67. Additionally, the thioether-functional, oligomeric polythiol, when reacted in accordance with the process of the present invention with a reactive compound having functional groups that are reactive with active hydrogens, can produce a polymerizate having an Abbe number of at least 30, or at least 35, or at least 38, or at least 39, or at least 40, or at least 44. The refractive index and Abbe number can be determined by methods known in the art such as American Standard Test Method (ASTM) Number D 542-00, using various known instruments. The refractive index and Abbe number can also be measured in accordance with ASTM D 542-00 with the following exceptions: (i) test one to two samples/specimens instead of the minimum of three specimens specified in Section 7.3; and (ii) test the samples unconditioned instead of conditioning the samples/specimens prior to testing as specified in Section 8.1. Further, an Atago model DR-M2 Multi-Wavelength Digital Abbe Refractometer can be used to measure the refractive index and Abbe number of the samples/specimens,

Further, any of the thioether-functional, oligomeric polythiols described herein, when reacted in accordance with the process of the present invention with a reactive compound having functional groups that are reactive with active hydrogens, can produce a polymerizate having a Martens hardness of at least 20 $N/mm^2$, or often at least 50, or more often between 70 and 200. Such polymerizates are typically not elastomeric; i. e., they are not substantially reversibly deformable (e. g., stretchable) due to their rigidity and do not typically exhibit properties characteristic of rubber and other elastomeric polymers.

Optical articles prepared by the process of the present invention include ophthalmic articles such as piano (without optical power) and vision correcting (prescription) lenses (finished and semi-finished) including multifocal lenses (bifocal, trifocal, and progressive lenses); and ocular devices such as contact lenses and intraocular lenses, sun lenses, fashion lenses, sport masks, face shields and goggles. The optical article also may be chosen from glazings such as architectural windows and vehicular transparencies such as automobile or aircraft windshields and side windows.

Component A used in the process of the present invention may comprise an isocyanate-functional polyurethane prepolymer prepared by reacting a polyisocyanate with any of the thioether-functional, oligomeric polythiols disclosed herein (e. g., reaction products of a compound having at least two thiol functional groups, a compound having triple bond functionality, and optionally a compound having at least two double bonds) and optionally another active hydrogen-containing material. Note that the polyurethane prepolymer may contain disulfide linkages due to disulfide linkages contained in the polythiol and/or polythiol oligomer used to prepare the polyurethane prepolymer.

Component A comprising a material having functional groups that are reactive with active hydrogens may comprise, for example, a polyisocyanate, a blocked polyisocyanate, a polyisothiocyanate, a polyepoxide, a polyepisulfide, a polyacid, an anhydride, a polyanhydride, a polyethylenically unsaturated material, such as a polyvinyl ether or poly(meth)acrylate, and/or mixtures of the above.

As used herein, the term "polyisocyanate" is intended to include blocked (or capped) polyisocyanates as well as unblocked polyisocyanates. Polyisocyanates and polyisothiocyanates useful in the reactive compound (A) are numerous and widely varied. Suitable polyisocyanates for use in the present invention can include but are not limited to polymeric and $C_2$-$C_{20}$ linear, branched, cyclic and aromatic polyisocyanates. Suitable polyisothiocyanates for use in the present invention can include but are not limited to polymeric and $C_2$-$C_{20}$ linear, branched, cyclic and aromatic polyisothiocyanates.

Non-limiting examples of suitable polyisocyanates and polyisothiocyanates can include polyisocyanate having at least two isocyanate groups; polyisothiocyanates having at least two isothiocyanate groups; mixtures thereof; and combinations thereof, such as a material having isocyanate and isothiocyanate functionality.

Non-limiting examples of polyisocyanates can include aliphatic polyisocyanates, cycloaliphatic polyisocyanates wherein one or more of the isocyanato groups are attached directly to the cycloaliphatic ring, cycloaliphatic polyisocyanates wherein one or more of the isocyanato groups are not attached directly to the cycloaliphatic ring, aromatic polyisocyanates wherein one or more of the isocyanato groups are attached directly to the aromatic ring, and aromatic polyisocyanates wherein one or more of the isocyanato groups are not attached directly to the aromatic ring. When an aromatic polyisocyanate is used, generally care should be taken to select a material that does not cause the final reaction product to color (e.g., yellow).

Examples of suitable polyisocyanates can include but are not limited to DESMODUR N 3300 (hexamethylene diisocyanate trimer) and DESMODUR N 3400 (60% hexamethylene diisocyanate dimer and 40% hexamethylene diisocyanate trimer), which are commercially available from Bayer Corporation.

The polyisocyanate can include dicyclohexylmethane diisocyanate and isomeric mixtures thereof. As used herein and the claims, the term "isomeric mixtures" refers to a mixture of the cis-cis, trans-trans, and cis-trans isomers of the polyisocyanate. Non-limiting examples of isomeric mixtures for use in the present invention can include the trans-trans isomer of 4,4'-methylenebis(cyclohexyl isocyanate), hereinafter referred to as "PICM" (paraisocyanato cyclohexylmethane), the cis-trans isomer of PICM, the cis-cis isomer of PICM, and mixtures thereof.

Additional aliphatic and cycloaliphatic diisocyanates that can be used include 3-isocyanato-methyl-3,5,5-trimethyl cyclohexyl-isocyanate ("isophorone diisocyanate" or "IPDI") which is commercially available from Arco Chemical, meta-tetramethylxylylene diisocyanate (1,3-bis(1-isocyanato-1-methylethyl)-benzene) which is commercially available from Cytec Industries Inc. as TMXDI® (Meta) Aliphatic Isocyanate, and m-xylylene diisocyanate (MXDI). Mixtures of any of the foregoing may also be used.

As used herein and the claims, the terms aliphatic and cycloaliphatic diisocyanates refer to 6 to 100 carbon atoms linked in a straight chain or cyclized having two diisocyanate reactive end groups. The aliphatic and cycloaliphatic diisocyanates for use in the present invention can include TMXDI and compounds of the formula $R\text{-}(NCO)_2$ wherein R represents an aliphatic group or a cycloaliphatic group.

Further non-limiting examples of suitable polyisocyanates and polyisothiocyanates can include aliphatic polyisocyanates and polyisothiocyanates; ethylenically unsaturated polyisocyanates and polyisothiocyanates; alicyclic polyisocyanates and polyisothiocyanates; aromatic polyisocyanates and polyisothiocyanates wherein the isocyanate groups are not bonded directly to the aromatic ring, e.g., m-xylylene diisocyanate; aromatic polyisocyanates and polyisothiocyanates wherein the isocyanate groups are bonded directly to the aromatic ring, e.g., benzene diisocyanate; aliphatic polyisocyanates and polyisothiocyanates containing sulfide linkages; aromatic polyisocyanates and polyisothiocyanates containing sulfide or disulfide linkages; aromatic polyisocyanates and polyisothiocyanates containing sulfone linkages; sulfonic ester-type polyisocyanates and polyisothiocyanates, e.g., 4-methyl-3-isocyanatobenzenesulfonyl-4'-isocyanatophenol ester; aromatic sulfonic amide-type polyisocyanates and polyisothiocyanates; sulfur-containing heterocyclic polyisocyanates and polyisothiocyanates, e.g., thiophene-2,5-diisocyanate; halogenated, alkylated, alkoxylated, nitrated, carbodiimide modified, urea modified and biuret modified derivatives of polyisocyanates thereof; and dimerized and trimerized products of polyisocyanates thereof.

In particular embodiments of the present invention, the polyisocyanates can include toluene diisocyanate, 4,4'-diphenylmethane diisocyanate, meta-xylylene diisocyanate, hydrogenated meta-xylylene diisocyanate (1,3-isocyanatomethylcyclohexane), 3-isocyanato-methyl-3,5,5-trimethyl cyclohexyl-isocyanate, hexamethylene diisocyanate, meta-tetramethylxylylene diisocyanate (1,3-bis(1-isocyanato-1-methylethyl)-benzene), and/or 4,4'-methylenebis(cyclohexyl isocyanate).

In certain embodiments component A comprises a diisocyanates or a mixture of a diisocyanate and a polyisocyanate having more than two isocyanate functional groups. In such a case, the polyisocyanate is present in an amount up to 10 percent by weight of the mixture. In one embodiment, the component A comprises isophorone diisocyanate, meta-tetramethylxylylene diisocyanate (1,3-bis(1-isocyanato-1-methylethyl)-benzene), and/or methylene bis(4-cyclohexyldiisocyanate), available from Bayer Corporation as DESMODUR W.

Non-limiting examples of materials having isocyanate and isothiocyanate groups can include materials having aliphatic, alicyclic, aromatic or heterocyclic groups and which optionally contain sulfur atoms in addition to those of the isothiocyanate groups. Non-limiting examples of such materials can include 1-isocyanato-3-isothiocyanalopropane, 1-isocyanato-5-isothiocyanatopentane, 1-isocyanato-6-isothiocyanatohexane, isocyanatocarbonyl isothiocyanate, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanato-4'-isothiocyanato-diphenyl sulfide and 2-isocyanato-2'-isothiocyanatodiethyl disulfide.

Isocyanate groups may be blocked or unblocked as desired. If the polyisocyanate is to be blocked or capped, any suitable aliphatic, cycloaliphatic, or aromatic alkyl monoalcohol or phenolic compound known to those skilled in the art can be used as a capping agent for the polyisocyanate.

The molecular weight of the polyisocyanate and polyisothiocyanate can vary widely. The number average molecular weight (Mn) of each can be at least 100 grams/mole, or at least 150 grams/mole, or less than 15,000

grams/mole, or less than 5000 grams/mole. The number average molecular weight can be determined using known methods. The number average molecular weight values recited herein and the claims were determined by gel permeation chromatography (GPC) using polystyrene standards.

The amount of polyisocyanate compound and the amount of oligomeric polythiol, when used to prepare an isocyanate-terminated polyurethane prepolymer or sulfur-containing Polyurethane prepolymer, can be selected such that the equivalent ratio of (NCO):(SH + OH) can be greater than 1.0:1.0, or at least 2.0:1.0, or at least 2.5:1.0, or less than 4.5:1.0, or less than 6.5:1.0. Likewise, in the preparation of a prepolymer, amount of polyisothiocyanate and the amount of oligomeric polythiol can be selected such that the equivalent ratio of (NCS):(SH + OH) can be greater than 1.0:1.0, or at least 2.0:1.0, or at least 2.5:1.0, or less than 4.5:1.0, or less than 6.5:1.0. The amount of a combination of polyisothiocyanate and polyisocyanate used and the amount of oligomeric polythiol in the preparation of a prepolymer can be selected such that the equivalent ratio of (NCS + NCO):(SH + OH) can be greater than 1.0:1.0, or at least 2.0:1.0, or at least 2.5:1.0, or less than 4.5:1.0, or less than 6.5:1.0.

In embodiments wherein the component A comprises polyisothiocyanate and/or polyisocyanate, there is often included in the reaction mixture a thermal stabilizer such as any of the antioxidants as are well known in the art. The thermal stabilizer can include a phosphite, for example a trisaryl phosphite, in particular, trisnonylphenyl phosphite, added as a stabilizer. The thermal stabilizer may be added to the reaction mixture at any phase of the reaction. For example, the thermal stabilizer may be added during the preparation of the oligomeric polythiol and carried forward to the reaction with the polyisocyanate and/or polyisothiocyanate. Alternatively, the thermal stabilizer may be mixed with the polyisocyanate and/or polyisothiocyanate before reaction with component B.

Polyepoxides and polyepisulfides are also suitable for use in the component A. Examples of suitable polyepoxides include low molecular weight polyepoxides such as 3,4-epoxycyclohexylmethyl 3,4-epoxycyclohexanecarboxylate and bis(3,4-epoxy-6-methylcyclohexyl-methyl) adipate. Higher molecular weight polyepoxides, including polyglycidyl ethers of polyhydric phenols and alcohols, are also suitable.

Other specific examples of polyepoxide materials are disclosed in US 5,369,141; US 5,374,668; and elsewhere. Epoxide-containing materials are often produced by reacting compounds containing active hydrogens with epihalohydrin such as epichlorohydrin or epibromohydrin, using any method known in the art, including but not limited to those procedures disclosed in US 2,324,483 and US 5,807,975. Non-limiting examples of classes of compounds containing active hydrogens that may be chain-extended with an epihalohydrin include compounds having two or more thiol groups, compounds having one or more amino groups, compounds having two or more hydroxyl groups, compounds having combinations of such groups, or mixtures of compounds containing such groups, the Bisphenols, the chlorinated Bisphenols, the brominated Bisphenols, the polyhydric phenols, and the Novolac resins. Epoxide-containing materials may also be produced by reacting ethylenically unsaturated compounds with an appropriate oxidizing agent, such as hydrogen peroxide or meta-chloroperbenzoic acid. Suitable epoxide-containing materials of this type can include but are not limited to the diepoxide derived from 4-vinyl-1-cyclohexene.

Non-limiting examples of aliphatic non-cyclic epoxide-containing materials include the diglycidyl ethers of ethylene glycol, butanediol, diethylene glycol, 1,2-ethanedithiol, and 2-mercaptoethyl sulfide.

Non-limiting examples of epoxide-containing materials containing non-aromatic rings are the poly-epoxides of cyclic polyenes, including but not limited to the bis-epoxide of 4-vinyl-1-cyclohexene,

Non-limiting examples of epoxide-containing materials containing aromatic rings include the polyglycidyl ethers of Bisphenol A, tetrabromo-Bisphenol A, Bisphenol F, Bisphenol S, resorcinol, hydroquinone, and Novolac resin.

Suitable episode-containing materials can vary, and can include but are not limited to materials having two or more episulfide functional groups. For example, the episulfide-containing material can have two or more moieties represented by the hollowing graphic formula XV:

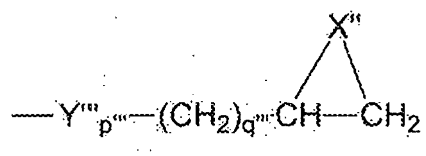

(XV)

wherein X" can be S or O; Y"' can be $C_1$ - $C_{10}$ alkyl, O, or S; p"' can be an integer from 0 to 2, and q"' can be an integer from 0 to 10. In a non-limiting embodiment, the numerical ratio of S is 50% or more, on the average, of the total amount of S and O constituting a three-membered ring.

The episulfide-containing material having two or more moieties represented by the formula (VIII) can be attached to an acyclic and/or cyclic skeleton. The acyclic skeleton can be branched or unbranched, and it can contain sulfide and/or ether linkages. The episulfide-containing material can be obtained by replacing the oxygen in an epoxy ring-containing material using sulfur, thiourea, triphenylphosphine sulfide or other such reagents known in the art. Alkylsulfide-type episulfide-containing materials can be obtained by reacting various known polythiols with epichlorohydrin in the presence of an alkali to obtain an alkylsulfide-type epoxy material; and then replacing the oxygen in the epoxy ring as described above.

In alternate non-limiting embodiments, the cyclic skeleton can include the following materials:

(a) an episulfide-containing material wherein the cyclic skeleton can be an alicyclic skeleton,
(b) an episulfide-containing material wherein the cyclic skeleton can be an aromatic skeleton, and
(c) an episulfide-containing material wherein the cyclic skeleton can be a heterocyclic skeleton including a sulfur atom as a hetero-atom.

Each of the above materials can contain a linkage of a sulfide, an ether, a sulfone, a ketone, and/or an ester.

Non-limiting examples of suitable episulfide-containing materials having an alicyclic skeleton can include 1,3- and 1,4-bis(β-epithiopropylthio)cyclohexane, 1,3-and 1,4-bis(β-epithiopropylthiomethyl)cyclohexane, bis[4-(β-epithiopropylthio)cyclohexyl] methane, 2,2-bis[4-(β-epithiopropylthio)cyclohexyl] propane, bis[4-(β-epithiopropylthio)cyclohexyl]sulfide, 4-vinyl-1-cyclohexene diepisulfide, 4-epithioethyl-1-cyclohexene sulfide, 4-epoxy-1,2-cyclohexene sulfide, 2,5-bis(β-epithiopropylthio)-1,4-dithiane, and 2,5-bis(β-epithiopropylthioethylthiomethyl)-1,4-dithiane.

Non-limiting example of suitable episulfide-containing materials having an aromatic skeleton can include 1,3- and 1,4-bis(β-epithiopropylthio)benzene, 1,3- and 1,4-bis(β-epithiopropylthiomethyl)benzene, bis[4-(β-epithiopropylthio)phenyl] methane, 2,2-bis[4-(β-epithiopropylthio)phenyl] propane, bis[4-(β-epithiopropylthio)phenyl] sulfide, bis[4-(β-epithiopropylthio)phenyl] sulfone, and 4,4-bis(β-epithiopropylthio)biphenyl.

Non-limiting examples of suitable episulfide-containing materials having a heterocyclic skeleton including the sulfur atom as the hetero-atom can include the materials represented by the following general formulas:

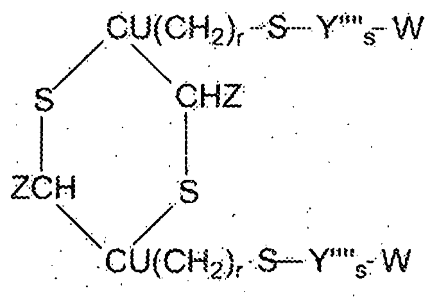

(XVI)

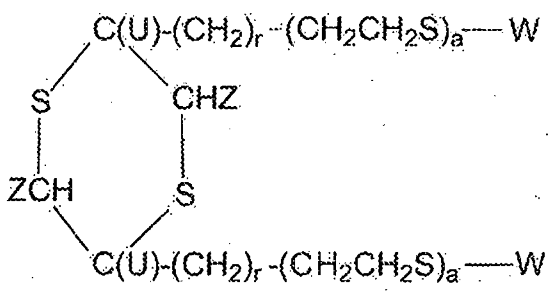

(XVII)

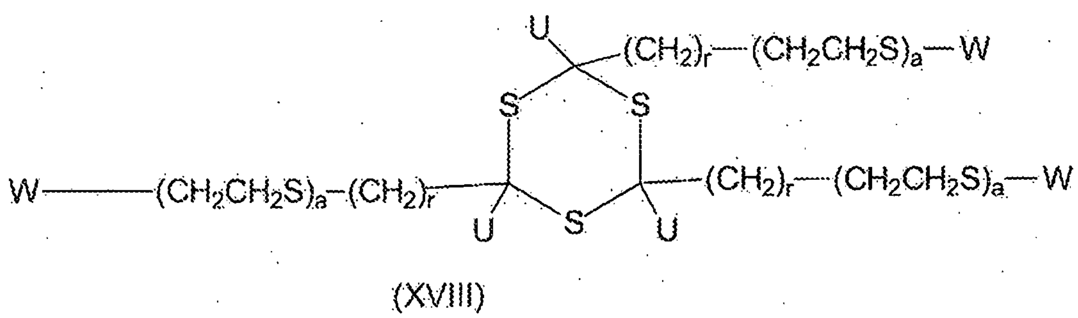

(XVIII)

wherein r can be an integer from 1 to 5; s can be an integer from 0 to 4; a can be an integer from 0 to 5; U can be a hydrogen atom or an alkyl group having 1 to 5 carbon atoms; Y'''' can be $-(CH_2CH_2S)-$; Z can be chosen from a hydrogen atom, an alkyl group having 1 to 5 carbon atoms or $-(CH_2)_rSY''''_sW$; W can be an epithiopropyl group represented by the following graphic formula XIX:

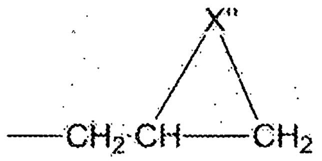

(XIX)

wherein X" can be O or S.

Additional non-limiting examples of suitable episulfide-containing materials can include 2,5-bis(β-epithiopropylthiomethyl)-1,4-dithiane; 2,5-bis(β-epithiopropylthioethylthiomethyl)-1,4-dithiane; 2,5-bis(β-epithiopropylthioethyl)-1,4-dithiane; 2,3,5-tri(β-epithiopropylthioethyl)-1,4-dithiane; 2,4,6-tris(β-epithiopropylthiomethyl)-1,3,5-trithiane; 2,4,6-tris(β-epithiopropylthioethyl)-1,3,5-tríthiane; 2,4,6-tris(β-epithiopropylthiomethyl)-1,3,5-trithiane; 2.4,6-tris(β-epithiopropylthioethylthioethyl)-1,3,5-trithiane; such as the materials represented by graphic formulae XX, XXI, XXII and XXIII:

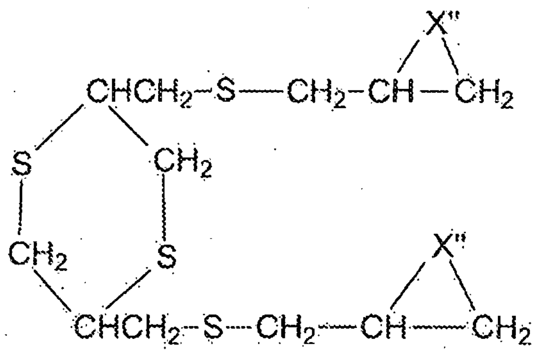

(XX)

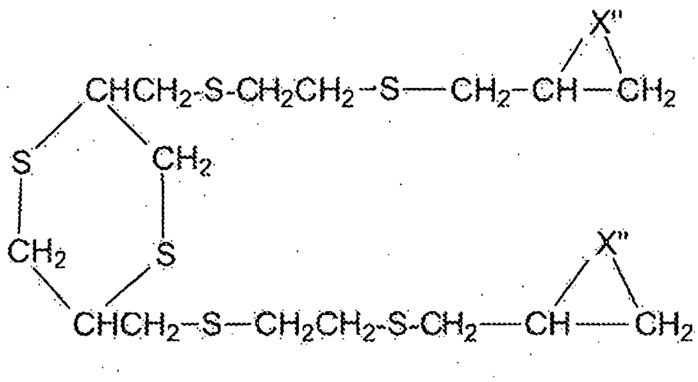

(XXI)

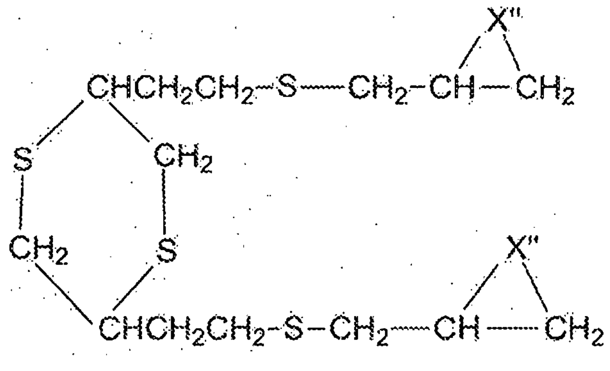

(XXII)

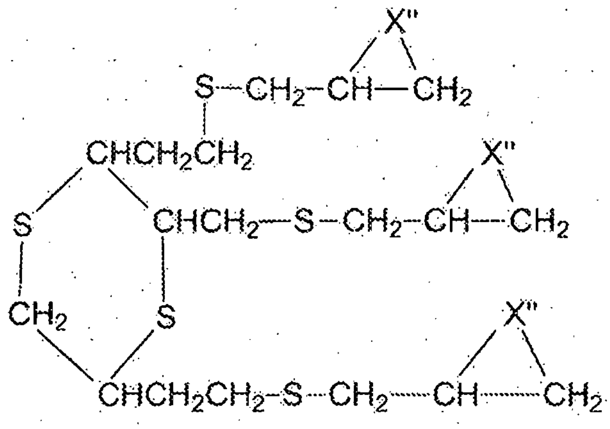

(XXIII)

wherein X" can be as defined above.

Polyacids, particularly polycarboxylic acids, are also suitable for use in component A. Non-limiting examples of unsaturated polycarboxylic acids, e.g., dicarboxylic acids, include maleic, fumaric, citraconic, itaconic and meconic acids, their anhydrides and their lower alkyl esters or acid halides. Non-limiting examples of saturated polycarboxylic acids include aliphatic dicarboxylic acids such as malonic, succinic, glutaric, adipic, suberic, azelaic, pimelic and sebacic acids; aromatic acids such as orthophthalic, terephthalic, isophthalic acids and the anhydrides of such aromatic acids, such as phthalic anhydride and maleic anhydride, and the lower alkyl esters or acid halides of these acids or mixtures thereof. Non-limiting examples of suitable cyclic anhydrides include tetrahydrophthalic anhydride, hexahydrophthalic anhydride, methyl hexahydrophthalic anhydride, maleic anhydride adduct of cyclopentadiene, maleic anhydride adduct of methylcyclopentadiene, chlorendic anhydride, pyromellitic dianhydride, and others disclosed in US 5,369,141.

Mixtures of acids and/or anhydrides may also be used.

Polyethylenically unsaturated reactive compounds; i. e., materials having multiple ethylenically unsaturated groups (double bonds), are particularly useful in compositions that cure using actinic radiation; e. g., UV curable compositions. Any of the materials disclosed above having at least two double bonds is suitable. Polyvinyl ethers are examples of suitable reactive compounds. Poly(meth)acrylate reactive compounds include ethylene glycol di(meth)acrylate, tetraethylene glycol di(meth)acrylate, glycerol di(meth)acrylate, glycerol tri(meth)acrylate, 1,3-propylene glycol di(meth)acrylate, dipropylene glycol di(meth)acrylate, 1,4-butanediol di(meth)acrylate, 1,2,4-butanetriol tri(meth)acrylate, 1,6-hexanediol di(meth)acrylate, 1,4-cyclohexanediol di(meth)acrylate, 1,4-benzenediol di(meth)acrylate, pentaerythritol tetra(meth)acrylate, 1,5-pentanediol di(meth)acrylate, trimethylolpropane di(meth)acrylate, and trimethylolpropane tri(meth)acrylate.

The compound (c) containing active hydrogens that may be present in reactive component B may be any compound or mixture of compounds that contain active hydrogens (e.g., active hydrogens of hydroxyl, thiol or amino groups). The compound (c) may comprise a compound having at least two active hydrogens comprising primary amine groups, secondary amine groups, hydroxyl groups, thiol groups, and/or combinations thereof. A single polyfunctional compound having a single type of functional group may be used; likewise, a single polyfunctional compound having mixed functional groups (e.g. hydroxyl and amino groups) may be used. Several different compounds may be used in

admixture having the same or different functional groups; e. g., two different polyamines may be used, polythiols mixed with polyamines may be used, or polyamines mixed with hydroxyl functional polythiols, for example, are suitable.

The compound (c) may have at least two primary and/or secondary amine groups (polyamine). Non-limiting examples of suitable polyamines include primary or secondary diamines or polyamines in which the radicals attached to the nitrogen atoms can be saturated or unsaturated, aliphatic, alicyclic, aromatic, aromatic-substituted-aliphatic, aliphatic-substituted-aromatic, and heterocyclic. Non-limiting examples of suitable aliphatic and alicyclic diamines include 1,2-ethylene diamine, 1,2-propylene diamine, 1,8-octane diamine, isophorone diamine, propane-2,2-cyclohexyl amine, and the like. Non-limiting examples of suitable aromatic diamines include phenylene diamines and toluene diamines, for example o-phenylene diamine and p-tolylene diamine. Polynuclear aromatic diamines such as 4,4'-biphenyl diamine, 4,4'-methylene dianiline and monochloro- and dichloro- derivatives of 4,4'-methylene dianiline are also suitable.

Suitable polyamines for use in the present invention can include but are not limited to materials having the following graphic formula XXIV:

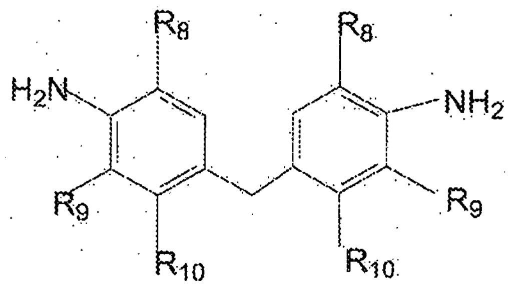

(XXIV)

wherein $R_8$ and $R_9$ can each be independently chosen from methyl, ethyl, propyl, and isopropyl groups, and $R_{10}$ can be chosen from hydrogen and chlorine. Non-limiting examples of polyamines for use in the present invention include the following compounds, manufactured by Lonza Ltd. (Basel, Switzerland):

LONZACURE® M-DIPA: $R_8$=$C_3H_7$; $R_9$=$C_3H_7$; $R_{10}$=H
LONZACURE® M-DMA: $R_8$=$CH_3$; $R_9$=$CH_3$; $R_{10}$=H
LONZACURE® M-MEA: $R_8$=$CH_3$; $R_9$=$C_2H_5$; $R_{10}$=H
LONZACURE® M-DEA: $R_8$=$C_2H_5$; $R_9$=$C_2H_5$; $R_{10}$=H
LONZACURE® M-MIPA: $R_8$=$CH_3$; $R_9$=$C_3H_7$; $R_{10}$=H
LONZACURE® M-CDEA: $R_8$=$C_2H_5$; $R_9$=$C_2H_5$; $R_{10}$=Cl

wherein $R_8$, $R_9$ and $R_{10}$ correspond to the aforementioned chemical formula.

The polyamine can include a diamine reactive compound such as 4,4'-methylenebis(3-chloro-2,6-diethylamine), (Lonzacure® M-CDEA), which is available in the United States from Air Products and Chemical, Inc. (Allentown, Pa.); 2,4-diamino-3,5-diethyl-toluene, 2,6-diamino-3,5-diethyl-toluene and mixtures thereof (collectively "diethyltoluenediamine" or "DETDA"), which is commercially available from Albemarle Corporation under the trade name Ethacure 100; dimetliylthiotoluenediamine (DMTDA), which is commercially available from Albemarle Corporation under the trade name Ethacure 300; 4,4'-methylene-bis-(2-chloroaniline) which is commercially available from Kingyorker Chemicals as MOCA. DETDA can be a liquid at room temperature with a viscosity of 156 cPs at 25°C. DETDA can be isomeric, with the 2,4-isomer range being from 75 to 81 percent while the 2,6-isomer range can be from 18 to 24 percent. The color stabilized version of Ethacure 100 (i.e., formulation which contains an additive to reduce yellow color), which is available under the name Ethacure 100S may be used in the present invention.

Other examples of the polyamine can include ethyleneamines, Suitable ethyleneamines can include but are not limited to ethylenediamine (EDA), diethylenetriamine (DETA), triethylenetetramine (TETA), tetraethylenepentamine (TEPA), pentaethylenehexamine (PEHA), piperazine, morpholine, substituted morpholine, piperidine, substituted piperidine, diethylenediamine (DEDA), and 2-amino-1-ethylpiperazine. In particular embodiments, the polyamine can be chosen from one or more isomers of $C_1$-$C_3$ dialkyl toluenediamine, such as but not limited to 3,3'-dimethyl-2,4-toluenediamine, 3,5-dimethyl-2,8-toluenediamine, 3,5-diethyl-2,4-toluenediamine, 3,5-diethyl-2,6-toluenediamine, 3,5-diisopropyl-2,4-toluenediamine, 3,5-diisopropyl-2,6-toluenediamine, and mixtures thereof. Methylene dianiline and trimethyleneglycol di(para-aminobenzoate) are also suitable.

Additional examples of suitable polyamines include methylene bis anilines, aniline sulfides, and bianilines, any of which may be hetero-substituted, provided the substituents do not interfere with any reactions to take place among

the reactants. Specific examples include 4,4'-methylene-bis(2,6-dimethylaniline), 4,4'-methylene-bis(2,6-diethylaniline), 4,4'-methylene-bis(2-ethyl-6-methylaniline), 4,4'-methylene-bis(2,6-diisopropylaniline), 4,4'-methylene-bis(2-isopropyl-6-methylaniline) and 4,4'-methylene-bis(2,6-diethyl-3-chloroaniline).

Diamino toluenes such as diethyl toluene diamine (DETDA) are also suitable.

In certain embodiments when the reactive component A comprises ísocyanate functionality, the amounts of each reactant can be selected such that the equivalent ratio of (NH + SH + OH) : (NCO) can range from 0.80:1.0 to 1.1:1.0, or from 0.85:1.0 to 1.0:1.0, or from 0.90:1.0 to 1.0:1.0, or from 0.90:1.0 to 0.95:1.0, or from 0.95:1.0 to 1.0:1.0.

In embodiments wherein the reactive component A comprises polyisocyanate and/or polyisothiocyanate, the amounts of each reactant can be selected such that the equivalent ratio of (NH + SH + OH) : (NCO + NCS) can range from 0.80:1.0 to 1.1:1.0, or from 0.85:1.0 to 1.0:1.0, or from 0.90:1.0 to 1.0:1.0, or from 0.90:1.0 to 0.95:1.0, or from 0.95:1.0 to 1.0:1.0.

The active hydrogen-containing compound (c) may have at least two primary and/or secondary hydroxyl groups (polyol). Suitable polyols include diols such as glycols and higher polyols. Hydroxyl functional polyesters as are known to those skilied in the art are also suitable for use as the compound (c). In alternate non-limiting embodiments, the active hydrogen-containing material for use in the present invention can be chosen from polyether glycols and polyester glycols having a number average molecular weight of at least 200 grams/mole, or at least 300 grams/mole, or at least 750 grams/mole; or no greater than 1,500 grams/mole, or no greater than 2,500 grams/mole, or no greater than 4,000 grams/mole.

Any of the polythiols disclosed above, including the polythiols with hydroxyl functionality, are suitable for use as the compound (c).

Reaction of the various reactive components may be enhanced with the use of catalysts as can be determined by those skilled in the art. Suitable catalysts can be selected from those known in the art and are typically present in component B. Non-limiting examples can include tertiary amine catalysts, organophosphorus compounds, tin compounds, or mixtures thereof, depending on the nature of the various reactive components. In alternate embodiments, the catalysts can comprise dimethyl cyclohexylamine or dibutyl tin dilaurate or mixtures thereof. Degassing can take place prior to or following addition of catalyst.

When the reactive component A comprises a polyisocyanate, a urethanation catalyst can be used in the present invention to enhance the reaction of the polyurethane-forming materials. Suitable urethanation catalysts can vary; for example, suitable urethanation catalysts can include those catalysts that are useful for the formation of urethane by reaction of the NCO and OH-containing materials and/or the reaction of the NCO and SH-containing materials. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. The catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, dibutyltin dichloride, 1,4-diazabicyclo[2.2.2]octane, and mixtures thereof. The catalyst can alternately be zinc octoate, bismuth, or ferric acetylacetonate.

Further non-limiting examples of suitable catalysts can include tin compounds such as dibutyl tin dilaurate, phosphines, tertiary ammonium salts and tertiary amines such as but not limited to triethylamine, triisopropylamine, dimethyl cyclohexylamine, N,N-dimethylbenzylamine and mixtures thereof. Such suitable tertiary amines are disclosed in United States Patent 5,693,738 at column 10, lines 6-38, the disclosure of which is incorporated herein by reference.

When employed, the catalyst level can vary and can be dependent upon a variety of factors such as the type and amounts of the reactive compounds used, as well as reaction conditions, speed of reaction, and degree of reaction desired. Typically, an organotin catalyst is present in component B in an amount less than 300 ppm, often about 250 ppm, and a tertiary amine catalyst is present in an amount less than 1000 ppm, usually less than 800 ppm, often about 720 ppm, based on the total weight of the reaction mixture (components A plus B).

In an embodiment of the present invention wherein the optical article is a lens, the mixture, which can be optionally degassed, can be introduced into a mold and the mold can be heated (i.e., using a thermal cure cycle) using a variety of conventional techniques known in the art. The thermal cure cycle can vary depending on the reactivity and molar ratio of the reactants, and the presence of catalyst(s). In particular embodiments, thermal cure cycle can include heating a mixture of a polyurethane prepolymer and an amine-containing curing agent compound, wherein the curing agent can include primary diamine or a mixture of primary diamine and trifunctional or higher functional polyamine and optionally polyol and/or polythiol and/or polythiol oligomer; or heating the mixture of polyisocyanate and/or polyisothiocyanate, polyol and/or polythiol and/or oligomeric polythiol, and amine-containing material; from room temperature to a temperature of 200°C over a period of from 0.5 hours to 120 hours; or from 80 to 150°C for a period of from 5 hours to 72 hours.

The present invention is more particularly described in the following examples that are intended as illustration only, since numerous modifications and variations therein will be apparent to those skilled in the art, without departing from the spirit and scope of the invention.

Examples

In the following examples, unless otherwise stated, the refractive index reported as D-line (nD) and/or E-line (nE) and Abbe number were measured on a multiple wavelength Abbe Refractometer Model DR-M2 manufactured by ATAGO Co., Ltd.; the refractive index and Abbe number of liquids were measured in accordance with ASTM-D1218; the refractive index and Abbe number of solids was measured in accordance with ASTM-D-542.

The viscosity was measured using a Brookfield CAP 2000+ Viscometer. Hardness was measured in accordance with ISO standard test method BS EN ISO 14577-1:2002, using a Fischer Scope H-100 instrument, supplied by Fischer Technology, Inc., and was reported as Martens Hardness (HM 0.3/15/0), in the units of Newtons(N)/$mm^2$. As required in said standard test method, the following test parameters were specified: Maximum Total Load applied to sample was 0.3 Newtons (N), time period over which Maximum Total Load was applied to sample was 15 seconds, and the time of duration for which said Maximum Total Load was then applied to sample was 0 seconds. Therefore, the test results were designated with the term "HM 0.3/15/0" in order to reflect these three test parameters.

Impact testing was accomplished in accordance with the Impact Energy Test, as described herein, and the results are reported in energy units (Joules). The Impact Energy Test consists of testing a flat sheet sample of polymerizate having a thickness of 3mm, and cut into a square piece approximately 4cm x 4cm. Said flat sheet sample of polymerizate is supported on a flat O-ring which is attached to top of the pedestal of a steel holder, as defined below. Said O-ruing is constructed of neoprene having a hardness of 40 ± 5 Shore A durometer, a minimum tensile strength of 8.3 MPa, and a minimum ultimate elongation of 400 percent, and has an inner diameter of 25 mm, an outer diameter of 31 mm, and a thickness of 2.3 mm. Said steel holder consists of a steel base, with a mass of approximately 12 kg, and a steel pedestal affixed to said steel base. The shape of said steel pedestal is approximated by the solid shape which would result from adjoining onto the top of a cylinder, having an outer diameter of 75 mm and a height of 10 mm, the frustum of a right circular cone, having a bottom diameter of 75 mm, a top diameter of 25 mm, and a height of 8 mm, wherein the center of said frustum coincides with the center of said cylinder. The bottom of said steel pedestal is affixed to said steel base, and the neoprene O-ring is centered and affixed to the top of the steel pedestal. The flat sheet sample, of polymerizate is centered and set on top of the O-ring. The Impact Energy Test is carried out by dropping steel balls of increasing weight from a distance of 50 inches (1.27 meters) onto the center of the flat sheet sample. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sheet is reported as the impact energy that corresponds to the highest level (i.e., largest ball) at which the sheet passes the test, and it is calculated according to the following formula:

$$E = mgd$$

wherein E represent impact energy in Joules (J), m represents mass of the ball in kilograms (kg), g represents acceleration due to gravity (i.e., 9.80665 m/$sec^2$) and d represents the distance of the ball drop in meters (i.e., 1.27 m).

The NCO concentration of the prepolymer (Component A) was determined by reaction with an excess of n-dibutylamine (DBA) to form the corresponding urea followed by titration of the unreacted DBA with HCl in accordance with the following procedure.

REAGENTS

1. Tetrahydrofuran (THF), reagent grade.
2. 80/20 THF/propylene glycol (PG) mix.
This solution was prepared in-lab by mixing 800 mls PG with 3.2 liters of THF in a 4-liter bottle.
3. DBA, dibutylamine certified ACS.
4. DBA/THF solution. 150 mL of DBA was combined with 750 mL of THF; it was mixed well and transferred to an amber bottle.
5. Hydrochloric acid, concentrated. ACS certified.
6. Isopropanol, technical grade.
7. Alcoholic hydrochloric acid, 0.2N. 75 ml of conc, HCl was slowly added to a 4-liter battle of technical grade isopropanol

while stirring with a magnetic stirrer; it was mixed for a minimum of 30 minutes. This solution was standardized using THAM
(Tris hydroxyl methyl amino methane) as follows: Into a glass 100-mL beaker, was weighed approximately 0.6 g $(HOCH_2)_3CNH_2$ primary standard to the nearest 0.1 mg and the weight was recorded. 100 mL DI water was added and mixed to dissolve and titrated with the prepared alcoholic HCl.
This procedure was repeated a minimum of one time and the values were averaged using the calculation below.

$$\text{Normality HCL} = \frac{\text{(Standard wt., grams)}}{\text{(mLs HCl) (0.12114)}}$$

EQUIPMENT

1. Polyethylene beakers, 200-mL, Falcon specimen beakers, No. 354020.
2. Polyethylene lids for above, Falcon No. 354017.
3. Magnetic stirrer and stirring bars.
4. Brinkmann dosimeter for dispensing or 10-mL pipette.
5. Autotitrator equipped with pH electrode.
6. 25-mL, 50-mL dispensers for solvents or 25-mL and 50-mL pipettes.

PROCEDURE

1. Blank determination: Into a 220-mL polyethylene beaker was added 50 mL THF followed by 10.0 mL DBA/THF solution.
The solution was capped and mixed with magnetic stirring for 5 minutes, 50 mL of the 80/20 THF/PG mix was added and titrated using the standardized alcoholic HC1 solution and this volume was recorded. This procedure was repeated and these values averaged for use as the blank value.
2. In a polyethylene beaker was weighed 1.0 gram of prepolymer sample and the weight was recorded to the nearest 0.1 mg. 50 mL THF was added, the sample was capped and allowed to dissolve with magnetic stirring.
3. 10.0 mL DBA/THF solution was added, the sample was capped and allowed to react with stirring for 15 minutes.
4. 50 mL of 80/20 THF/PG solution was added.
5. The beaker was placed on the titrator and the titration was started. This procedure was repeated.

CALCULATIONS

$$\%NCO = \frac{\text{(mls Blank – mls Sample) x (Normality HC1) x (4.2018)}}{\text{Sample weight, g}}$$

$$\text{IEW} = \frac{\text{(Sample wt., grams) x (1000)}}{\text{(mls Blank – mls Sample) x (Normality HC1)}}$$

IEW = Isocyanate Equivalent Weight

The SH groups within the product were determined using the following procedure. A sample size (0.1 mg) of

the product was combined with 50 mL of tetrahydrofuran (THF)/propylene glycol (80/20) and stirred at room temperature until the sample was substantially dissolved. While stirring, 25.0 mL of 0.1 N iodine solution (which was commercially obtained from Aldrich 31, 8898-1) was added to the mixture and then allowed to react for a time period of from 5 to 10 minutes. To this mixture was added 2.0 mL concentrated HC1. The mixture was then titrated potentiometrically with 0.1 N sodium thiosulfate in the millivolt (mV) mode. A blank value was initially obtained by titrating 25.0 mL iodine (including 1 mL of concentrated hydrochloric acid) with sodium thiosulfate in the same manner as conducted with the product sample.

$$\%SH = \frac{(\text{mls Blank} - \text{mls Sample}) \times (\text{Normality } NA_2S_2O_3) \times (3.307)}{\text{Sample weight, g}}$$

Example 1. Synthesis of 2/1 (mol/mol) adduct of Dimercaptodiethylsulfide (DMDS) and Propargyl alcohol(PA)

In a glass jar with magnetic stirrer were mixed Dimercaptodiethylsulfide from Nisso Maruzen, Japan, 154.0 g., 1.0 mol and Propargyl alcohol (PA) from Aldrich, 28.0 g., 0.5 mols at room temperature. Then this mixture was heated up to 60°C using an oil bath. The mixture was kept at this temperature upon stirring for 30 min. An exothermic reaction started to take place leading to increase in the temperature of the reaction mixture up to 80°C for a short period of time. This exothermic reaction was over after 30 minutes and the reaction temperature went down to 60°C, the temperature of the heating bath. Radical initiator Vazo 64, 50 mg., 275 ppm was added three times at intervals of 5 hours while the mixture was stirred at 60°C. Then equivalent weight of 181.5 g/equiv (theoretical 182g/equiv) was measured, based on that Mn = 363 was calculated (theoretically expected 364). Vazo 64, 50 mg., 275 ppm was added again and the mixture was heated at 60°C upon stirring for another 5 hours. The equivalent weight measurement showed no changes and the reaction was considered completed. The viscosity of thus obtained clear water white product was 258 cP (25°C), nD=1.627, Abbe 36, nE=1.631, Abbe 36.

Casting procedure

Polyurethane polymer articles were cast using a polyurethane mixing machine, described schematically in Figure 1. The two components that were charged in the Tank A and Tank B of the polyurethane mixing machine were:

Component A, charged in Tank A
Diisocyanate material containing thermal and light stabilizers.
Component B. charged in Tank B

A mixture of the material prepared in Example 1 (70% by weight), Dimercaptodiethyl sulfide (30% by weight), tin catalyst and tertiary amine catalyst.

The two components were degassed under vacuum in the tanks for 2 hours at ambient temperature. Then they were mixed in the mixing chamber in ratio by weight Component A/Component B=55.36/44.64. The reaction mixture coming out of the mixing chamber was partially polymerized material. This material was poured into glass molds and then cured in an oven at temperatures from 70 to 120°C.

See detailed description of the casting parameters and the yield of optical quality polymer lens parts in Table 1. Note that the process in accordance with the present invention as illustrated in Example 1 was run simultaneously with a comparative Example 1 that used the same reactants, but process parameters outside the scope of the present invention.

Table 1

| | Chamber Volume (cc) | Residence Time (sec) | Tertiary Amine Catalyst level in Polymer (ppm) | Organo Tin Catalyst Level in Polymer (ppm) | Mix Speed (Hz) | Component Pre-Heat Temperatures (°C) | Component A Flow Rate (g/min) | Component B Flow Rate (g/min) | Nozzle Temperature (°C) | Gel Time (sec) | Yield |
|---|---|---|---|---|---|---|---|---|---|---|---|
| Casting Example 1 | 250 | 70 | 720 | 260 | 60 | Not preheated | 130.10 | 104.90 | 123 | 150 | 82% |
| Comparative Example 1 | 110 | 48 | 900 | 260 | 120 | Not preheated | 83.01 | 66.99 | 131 | 115 | 52% |

Example 2. Synthesis of 3/2 (mol/mol) adduct of Dimercaptodiethylsulfide (DMDS) and Propargyl alcohol

In a glass jar with magnetic stirrer were mixed DMDS from Nisso Maruzen, Japan, 346.5 g., 2.25 mol and Propargyl alcohol from Aldrich, 84.0 g., 1.5 mols at room temperature. Then this mixture was heated up to 50°C using an oil bath. The mixture was kept at this temperature upon stirring for 1.5 hours. An exothermic reaction started to take place leading to increase in the temperature of the reaction mixture up to 70°C for a short period of time, then the temperature went down to 50°C, the temperature of the heating bath. Radical initiator Vazo 52, 120 mg, 275 ppm was added twice at 15 hours interval and the mixture was stirred at 50°C. Then SH equivalent weight was measured, it was 214. Vazo 52, 120 mg., 275 ppm was added again and the mixture was heated at 55°C upon stirring for another 15 hours. The equivalent weight of 283 g/equiv (theoretical 287 g/equiv) was measured. The viscosity of thus obtained clear water white viscous product was 115 cP (73°C), nD=1.631, Abbe 38, nE=1.635, Abbe 38.

Example 3. Synthesis of 2/1 (mol/mol) adduct of Dimercaptodiethylsulfide (DMDS) and Phenyl acetylene (PHA)

In a glass jar with magnetic stirrer were mixed DMDS from Nisso Maruzen, Japan, 77.0 g., 0.5 mol and Phenyl acetylene from Aldrich, 25.5 g., 0.25 mols at room temperature. Then this mixture was heated up to 70°C using an oil bath. Vazo 64, 20 mg, 200 ppm was added four times at 15 hours interval and the mixture was stirred at 70°C. Then SH equivalent weight was measured, it was 173 g/equiv. Vazo 64, 20 mg, 200 ppm was added again and the mixture was heated at 70°C upon stirring for another 15 hours. The SH equivalent weight of 173 g/equiv (theoretical 205 g/equiv) was measured. The product obtained was transparent, yellow viscous liquid, nD=1.635, Abbe 26, nE=1.641, Abbe 26.

Example 4. Synthesis of 2/1 (mol/mol) adduct of Dimercaptodiethylsulfide (DMDS) and 1,3-Diisopropenyl benzene (DIPEB),

524.6 g DMDS (3.4 moles) was charged to a glass jar, and the content was heated to 60°C. To the jar was slowly added 269.0 g DIPEB (1.7 moles) with mixing. Once the addition of DIPEB was completed, the jar was placed in an oven heated to 60°C for 2 hours. Afterwards, 0.1 g VAZO 52 was dissolved into the contents of the jar, and the jar was returned to the oven. After 20 hours, the resulting sample was titrated for -SH equivalents and was found to have an equivalent weight of 145 g/mol. 0.1 g VAZO 52 was dissolved into the reaction mixture, which was then returned to the oven. Over the course of 8 hours, two additions of 0.2 g VAZO 52 were made, and the reaction mixture kept in the 60°C oven over that time frame. 17 hours after the final addition of VAZO 52 was made, the resulting sample was titrated to an equivalent weight of 238 g/equiv (theoretical 233g/equivalent), The viscosity of the material at 25°C was measured and found to be 490 cps. The product obtained was transparent liquid, $n_D$=1.611, Abbe 35, nE=1.615, Abbe 35.

Example 5. Synthesis of 2/1 (mol/mol) adduct of Dimercaptodiethylsulfide (DMDS) and 5-Vinyl-2-norbornene (VNB),

77 g DMDS (0.5 moles) was charged to a glass jar, and the content was heated to 60°C. To this jar was slowly added 30 g VNB (0.25 moles) with mixing, while keeping the temperature of the mixture ~ 60°C. After completion of the addition the mixture was heated at 60°C for another 30 min, then 0.2 g VAZO 67 was dissolved into the contents of the jar, and the jar was heated at 65°C for 20 hours. The resulting product was analyzed for SH content by titration with

iodine as described previously. SH equivalent weight of 216 g/equiv (theoretical 214 g/equivalent) was found. The viscosity of the material at 25°C was measured and found to be 460 cps. The product obtained was transparent colorless liquid, nD=1.607, Abbe 39, nE=1.610, Abbe 39. The yield was quantitative.

Example 6. One pot synthesis of oligomeric polythiol, adduct of Dimercaptodiethylsulfide (DMDS), 1,3-Diisopropenyl benzene (DIPEB), and Propargyl alcohol (PA)

127.6 g DMDS (0.828 moles), 65.5 g DIPEB (0.415 moles) and 6.8 g PA (0.121 moles) were charged to a glass jar. The mixture was stirred at room temperature for 30 min. After that the mixture was heated at 60°C for another 30 min, then 0.1 g VAZO 67 was dissolved into the contents of the jar, and the jar was heated at 65°C for 15 hours. Two additional portions of 0.100 g VAZO 67 were added in an interval of 6 hours. The resulting product was analyzed for SH content by titration with Iodine as described previously. SH equivalent weight of 335 g/equiv (theoretical 341 g/equivalent) was found. The viscosity of the material at 73°C was measured and found to be 150 cps. The product obtained was transparent colorless liquid, nD=1.6152, Abbe 37, nE=1.620, Abbe 36.

Example 7. Synthesis of 2/1 (mol/mol) adduct of the product of Example 4 and Propargyl alcohol5)

The product of Example 4, 200.0 g., 0.42 mol and propargyl alcohol, 11.6 g., 0.21 mol were mixed at room temperature. Then this mixture was heated up to 65°C. Radical initiator Vazo 52, 42 mg, 200 ppm was added three times at intervals of 5 hours while the mixture was stirred at 65oC. Then SH equivalent weight was measured, it was 499 g/equiv. The mixture was heated at 65°C for another 5 hours and SH equivalent weight was measured again, it was 499 g/equiv , based on that Mn = 998 was calculated (theoretically expected 1008). The viscosity of thus obtained clear water white oligomeric mixture was 463 cP (73°C), nD=1.620, Abbe 36, nE=1.624, Abbe 35.

Example 8. Synthesis of 2/0.32/0.68 (mol/mol/mol) adduct of the product of Example 4, Propargyl alcohol and 5-Vinyl-2-norbornene (VNB)

The product of Example 4, 238.0 g., 0.5 mol, propargyl alcohol, 4.48 g., 0.08 mol and 5-vinyl-2-norbornene, 20.4 g., 0.17 mol were mixed at room temperature. Then this mixture was heated up to 60°C until it became homogeneous. Radical initiator Vazo 52, 20 mg, 76 ppm was added three times at intervals of 5 hours while the mixture was stirred at 60°C. Then SH equivalent weight was measured, it was 511 g/equiv, based on that Mn = 1022 was calculated (theoretically expected 1051). The equivalent weight did not change after another 5 hours of heating at 60°C and stirring. The viscosity of thus obtained clear water white oligomeric mixture was 468 cP (73°C), nD=1.615, Abbe 37, nE=1.619, Abbe 36.

Example 9. Synthesis of 2/0.5/0.5 (mol/mol/mol) adduct of the product of Example 4, Propargyl alcohol and 1,3-Diisopropenyl benzene (DIPEB)

The product of Example 4, 238.0 g., 0.5 mol, propargyl alcohol, 7.0 g., 0.125 mol and 1,3-Diisopropenyl benzene, 19.75 g, 0.125 mol were mixed at room temperature. Then this mixture was heated up to 65°C until it became homogeneous. Radical initiator Vazo 52, 20 mg, 76 ppm was added three times at intervals of 5 hours while the mixture was stirred at 65°C. Then SH equivalent weight was measured, it was 510 g/equiv, based on that $M_n$ = 1020 was calculated (theoretically expected 1059). The equivalent weight did not change after another 5 hours of heating at 60°C and stirring. The viscosity of thus obtained clear water white oligomeric mixture was 452 cP (73°C), nD=1.617, Abbe 36, nE=1.621, Abbe 35.

Example 10. Synthesis of polythiourethane prepolymer using the product of Example 7

4,4-Dicyclohexylmethane diisocyanate (Desmodur W) from Bayer Corp. (135.0 g, 1.03 mole eq.) the product of Example 7 (70.0 g, 0.2102 mole eq.) were mixed and degassed under vacuum for 2.5 hours at room temperature. The mixture was flushed with Nitrogen and heated for 18 hours at a temperature of 120°C. SH group analysis showed complete consumption of SH groups. The heating was terminated. The resulting clear mixture had viscosity (73°C) of 928 cP, nE of 1.551 (20°C), Abbe number of 45; and NCO groups of 16.73 %.

Example 11. Synthesis of polythiourethane prepolymer using the product of Example 8

4,4-Dicyclohexylmethane diisocyanate (Desmodur W) from Bayer Corp. (115.4 g, 0.881 mole eq.), isophorone diisocyanate (IPDI) from Bayer Corp. (12.8 g, 0.115 mole eq.) and the product of Example 8 (100.0 g, 0.226 mole eq.) were mixed and degassed under vacuum for 2.5 hours at room temperature. N,N-dimethylcyclohexyl amine (0.06 g,

263 ppm) was added to the mixture. The mixture was flushed with Nitrogen and heated for 5 hour at a temperature of 65°C. SH group analysis after that showed complete consumption of SH groups. The heating was terminated. The resulting clear mixture had viscosity (73°C) of 1403 cP, nE of 1.561 (20°C), Abbe number of 43; and NCO groups of 13.36 %.

Example 12. Synthesis of polythiourethane prepolymer using the product of Example 9

4,4-Dicyclohexylmethane diisocyanate (Desmodur W) from Bayer Corp. (126.5 g, 0.965 mole eq.), isophorone diisocyanate (IPDI) from Bayer Corp. (14.1 g, 0.127 mole eq.) and the product of Example 9 (100.0 g, 0.245 mole eq.) were mixed and degassed under vacuum for 2.5 hours at room temperature. N,N-dimethylcyclohexyl amine (0.075 g, 312 ppm) was added to the mixture. The mixture was flushed with Nitrogen and heated for 5 hour at a temperature of 65°C. SH group analysis after that showed complete consumption of SH groups. The heating was terminated, The resulting clear mixture had viscosity (73°C) of 1320 cP, nE of 1.558 (20°C), Abbe number of 44; and NCO groups of 14.99%.

Example 13. Chain extension of the polythiourethane prepolymer of Example 10

The product of Example 10 (50 g) was degassed under vacuum at a temperature of 60°C for four hours. Diethyltoluenediamine (Commercial name is Ethacure 100 from Albemarle Corporation) (DETDA) (9.76 g), the product of Example 4 (19.28g) and N,N-dimethylcyclohexyl amine (0.030 g) were mixed and degassed under vacuum at a temperature of 60°C for 2 hours. The two mixtures were then mixed together at the same temperature and charged between a preheated glass plates mold. The material was cured in a preheated oven at a temperature of 110°C for 72 hours. The cured material was clear and had nE of 1.595 (20°C) and Abbe number of 38 and Martens Hardness 110.

Example 14. Chain extension of the prepolymer of Example 11

The product of Example 11 (40 g) was degassed under vacuum at a temperature of 60°C for four hours. Diethyltoluenediamine (Commercial name is Ethacure 100 from Albemarle Corporation) (DETDA) (6.79 g) and the product of Example 4 (10.77 g) were mixed and degassed under vacuum at a temperature of 60°C for 2 hours. The two mixtures were then mixed together at the same temperature and charged between a preheated glass plates mold. The material was cured in a preheated oven at a temperature of 110°C for 72 hours. The cured material was clear and had nE of 1.596 (20°C) and Abbe number of 38 and Martens Hardness 84.

Example 15. Chain extension of the prepolymer of Example 12

The product of Example 12 (40 g) was degassed under vacuum at a temperature of 60°C for four hours. Diethyltoluenediamine (Commercial name is Ethacure 100 from Albemarle Corporation) (DETDA) (7.63 g) and the product of Example 4 (12.04 g) were mixed and degassed under vacuum at a temperature of 60°C for 2 hours. The two mixtures were then mixed together at the same temperature and charged between a preheated glass plates mold. The material was cured in a preheated oven at a temperature of 120°C for 24 hours. The cured material was clear and had nE of 1.596 (20°C) and Abbe number of 38 and Martens Hardness 97.

Example 16. One pot synthesis of polyurethane polymer using the product of Example 1

The product of Example 1 (27.8 g) was degassed under vacuum at a temperature of 60°C for four hours. 4,4-dicyclohexylmethane diisocyanate (Desmodur W) from Bayer (30.0 g) and N,N-dimethylcyclohexyl amine (0.020 g) were mixed well, then the mixture was degassed under vacuum at a temperature of 60°C for 2 hours. The two mixtures were then mixed together at the same temperature and charged between a preheated glass plates mold. The material was cured in a preheated oven at a temperature of 125°C for 24 hours. The cured material was clear and had refractive index (e-line) of 1.595 (20°C) and Abbe number of 41 and Martens hardness 109.

Example 17. One pot synthesis of polyurethane/urea polymer using the product of Example 2

Diethyltoluenediamine from Albemarle Corporation (DETDA) (1.7 g) and the product of Example 2 (24.6 g) were mixed and degassed under vacuum at a temperature of 75°C for four hours. 4,4-dicyclohexylmethane diisocyanate
(Desmodur W) from Bayer (25.0 g) and N,N-dimethylcyclohexyl amine (0.020 g) were mixed well, then the mixture was degassed under vacuum at a temperature of 60°C for 2 hours. The two mixtures were then mixed together and charged between a preheated glass plates mold. The material was cured in a preheated oven at a temperature of

120°C for 48 hours. The cured material was clear and had nE of 1.593 (20°C) and Abbe number of 40 and Martens Hardness 112.

Example 18. One pot synthesis of polyurethane polymer using the product of Example 1

The product of Example 1 (29.7 g) was degassed under vacuum at a temperature of 75°C for four hours. 4,4-dicyclohexylmethane diisocyanate (Desmodur W) from Bayer (30.0 g), 1,3-bis(1-isocyanato-1-methylethyl)-benzene) from Cytec Industries Inc (TMXDI) (3.02 g) and N,N-dimethylcyclohexyl amine (0.020 g) were mixed well, then the mixture was degassed under vacuum at a temperature of 60°C for 2 hours. The two mixtures were then mixed together and charged between a preheated glass plates mold. The material was cured in a preheated oven at a temperature of 125°C for 48 hours. The cured material was clear, yellowish and had nE of 1.596 (20°C) and Abbe number of 41 and Martens hardness 123.

Example 19. One pot synthesis of polyurethane polymer using the product of Example 1

The product of Example 1 (22.90 g) was degassed under vacuum at a temperature of 75°C for four hours. Isophorone diisocyanate (IPDI) from Bayer (21.18 g) and N,N-dimethylcyclohexyl amine (0.020 g) were mixed well, then the mixture was degassed under vacuum at a temperature of 60°C for 2 hours. The two mixtures were then mixed together and charged between a preheated glass plates mold. The material was cured in a preheated oven at a temperature of 125°C for 24 hours. The cured material was clear and had nE of 1.595 (20°C) and Abbe number of 40 and Martens Hardness 141.

Example 20. One pot synthesis of polyurethane polymer using the product of Example 1

The product of Example 1 (30.95 g) was degassed under vacuum at a temperature of 75°C for four hours. Isophorone diisocyanate (IPDI) from Bayer (15.00 g), 4,4-dicyclohexylmethane diisocyanate (Desmodur W) from Bayer (15.0 g) and N,N-dimethylcyclohexyl amine (0.020 g) were mixed well, then the mixture was degassed under vacuum at a temperature of 60°C for 2 hours. The two mixtures were then mixed together and charged between a preheated glass plates mold. The material was cured in a preheated oven at a temperature of 125°C for 24 hours. The cured material was clear and had nE of 1.595 (20°C) and Abbe number of 40 and Martens hardness 127.

Example 21. One pot synthesis of polyurethane/urea polymer using the product of Examples 2 and 4

The product of Example 2 (9.75 g) was mixed with the product of Example 4 (19.0 g) and diethyltoluenediamine from Albemarle Corporation (DETDA) (7.92 g). The mixture was degassed under vacuum at a temperature of 75°C for four hours. 4,4-dicyclohexylmethane diisocyanate (Desmodur W) from Bayer (30.0 g) and N,N-dimethylcyclohexyl amine (0.020 g) were mixed well, then the mixture was degassed under vacuum at a temperature of 60°C for 2 hours. The two mixtures were then mixed together and charged between a preheated glass plates mold. The material was cured in a preheated oven at a temperature of 125°C for 24 hours. The cured material was clear and had nE of 1.592 (20°C) and Abbe number of 39 and Martens Hardness 125.

Example 22. One pot synthesis of polyurethane/urea polymer using the product of Example 6

The product of Example 6 (36.7 g) was degassed under vacuum at a temperature of 60°C for four hours. 4,4-Dicyclohexylmethane diisocyanate (Desmodur W) from Bayer (33.3 g) and N,N-dimethylcyclohexyl amine (0.020 g) were mixed well, then the mixture was degassed under vacuum at a temperature of 60°C for two hours. Diethyltoluenediamine from Albemarle Corporation (DETDA) (9.73 g) was degassed under vacuum at room temperature for two hours. The three mixtures were then mixed together and charged between a preheated glass plates mold. The material was cured in a preheated oven at a temperature of 110°C for 24 hours. The cured material was clear and had nE of 1.595 (20°C) and Abbe number of 38 and Martens hardness 109.

Example 23. One pot synthesis of polyurethane/urea polymer based on the product described in Example 4. Example 7, DETDA and Desmodur W

The components listed in Table 2 were used in the amounts indicated to prepare polymeric sheets having a thickness of 3.5 mm for which test results are reported in Table 3. The polymeric sheets were prepared using a mixture of 3 components injected into a specially designed molding machine from Max Machinery. The first component was Desmodur W. The second component was combination of the catalyst, N,N-dimethylcyclohexyl amine with products of

Example 4 and Example 7. The first component was degassed under vacuum at room temperature for 16 hours. The second component was degassed under vacuum at 44°C for 16 hours prior to use. The third component was DETDA obtained from Albemarle Corporation, this component was degassed under vacuum at room temperature for 16 hours prior to use. The molding machine was a Urethane Processor Model No. 601-000-232, which was obtained from Max Machinery in Healdsburg, Calif, USA. The blended mixture was then injected into a preheated glass plate mold that was treated with an external mold release agent. The molds were placed in a convection oven for 24 hours at a temperature of 110° C. Afterwards, the temperature was ramped down to 85°C before demolding. The resulting sheets were cut into sizes appropriate for the testing described hereinbefore and reported in Table 3.

TABLE 2

| Example # | EX. 4 (Equiv) | EX. 7 (Equiv) | Catalyst (ppm) | Desmodur W (equiv) | DETDA (Equiv) |
|---|---|---|---|---|---|
| 23 | 0.25 | 0.27 | 300 | 1 | 0.43 |

TABLE 3

| Example # | Martens Hardness N/mm$^2$ | nE (20°C) | Abbe | Density Gram/cm$^3$ |
|---|---|---|---|---|
| 23 | 112 | 1.5957 | 37.6 | 1.17 |

Examples 24A-O. Polyurethane and polyureaurethane formulations based on products described in Examples 1 and 5, DMDS, DETDA and Desmodur W

The components listed in Table 4 were used in the amounts indicated to prepare polymeric sheets having a thickness of 3.5 mm for which test results are reported in Table 5. The polymeric sheets were prepared using a mixture of 3 components injected into a specially designed molding machine from Max Machinery described in Example 23. The first component was Desmodur W. The second component was combination of the catalyst, N,N-dimethylcyclohexyl amine with dithiols of Examples 1, 5 and/or DMDS. Each of these components was degassed under vacuum at 50°C for 16 hours prior to use. The third component was DETDA obtained from Albemarle Corporation, this component was degassed under vacuum at room temperature for 16 hours prior to use. The blended mixture was then injected into a preheated glass plate mold that was treated with an external mold release agent. The molds were placed in a convection oven for 24 hours at a temperature of 110° C. Afterwards, the temperature was ramped down to 85°C before demolding. The resulting sheets were cut into sizes appropriate for the testing described hereinbefore and reported in Table 5.

TABLE 4

| Example # | DMDS (Equiv) | EX. 1 (Equiv) | EX. 5 (Equiv) | Catalyst (ppm) | Desmodur W (equiv) | DETDA (Equiv) |
|---|---|---|---|---|---|---|
| 23A | 0 | 1.00 | 0 | 300 | 1 | 0 |
| 23B | 0 | 0.70 | 0.30 | 300 | 1 | 0 |
| 23C | 0 | 0.40 | 0.30 | 300 | 1 | 0.30 |
| 230 | 0.40 | 0.40 | 0 | 300 | 1 | 0.20 |
| 23E | 0.40 | 0.40 | 0.20 | 300 | 1 | 0 |
| 23F | 0 | 0.70 | 0 | 300 | 1 | 0.30 |
| 23G | 0.20 | 0.56 | 0.12 | 300 | 1 | 0.12 |
| 23H | 0.18 | 0.40 | 0.30 | 300 | 1 | 0.12 |
| 23I | 0.21 | 0.40 | 0.09 | 300 | 1 | 0.30 |
| 23J | 0.30 | 0.40 | 0.30 | 300 | 1 | 0 |
| 23K | 0.30 | 0.40 | 0 | 300 | 1 | 0.30 |
| 23L | 0 | 0.40 | 0.30 | 300 | 1 | 0.30 |
| 23M | 0 | 0.70 | 0 | 300 | 1 | 0.30 |
| 23N | 0 | 0.70 | 0.30 | 300 | 1 | 0 |
| 230 | 0.40 | 0.60 | 0 | 300 | 1 | 0 |

TABLE 5

| Example # | Martens Hardness N/mm$^2$ | nE (20°C) | Abbe | Density Gram/cm$^3$ |
|---|---|---|---|---|
| 23A | 106 | 1.5988 | 41.6 | 1.23 |
| 23B | 105 | 1.6008 | 41.1 | 1.22 |
| 23C | 124 | 1.5902 | 40.8 | 1.19 |
| 23D | 121 | 1.5868 | 40.6 | 1.20 |
| 23E | 108 | 1.5987 | 40.7 | 1.22 |
| 23F | 122 | 1.5859 | 40.8 | 1.19 |
| 23G | 115 | 1.5943 | 40.5 | 1.21 |
| 23H | 116 | 1.5957 | 40.7 | 1.21 |
| 23I | 123 | 1.5843 | 40.4 | 1.19 |
| 23J | 107 | 1.5991 | 40.6 | 1.22 |
| 23K | 124 | 1.5826 | 40.4 | 1.18 |
| 23L | 123 | 1.5899 | 40.7 | 1.19 |
| 23M | 123 | 1.5849 | 40.7 | 1.19 |
| 23N | 106 | 1.5977 | 41.4 | 1.22 |
| 23O | 109 | 1.5956 | 41.2 | 1.23 |

Whereas particular embodiments of this invention have been described above for purposes of illustration, it will be evident to those skilled in the art that numerous variations of the details of the present invention may be made without departing from the invention as defined in the appended claims.

## Claims

**1.** A process for preparing a molded optical article that is essentially free of optical defects, said process comprising:

a) introducing each of two separate reactive components A and B from separate supply vessels into a mixing chamber having a volume of 200 ml to 2000 ml;
b) mixing the components together in the mixing chamber for a period of 50 to 200 seconds to form a reaction mixture;
c) injecting the reaction mixture at a temperature of up to 130 °C into a mold;
d) holding the reaction mixture in the mold at a temperature and for a time sufficient to essentially cure the reaction mixture and form a molded optical article; and
e) releasing the article from the mold.

**2.** The process of claim 1, wherein

- the mixing chamber has a volume of 200 ml to 300 ml; or
- the components are mixed together in the mixing chamber for a period of at least 70 seconds; or
- the reaction mixture is injected into the mold at a temperature of up to 120 °C.

**3.** The process of claim 1, wherein the mold is a lens mold.

**4.** The process of claim 3 wherein the mold is an ophthalmic lens mold.

**5.** The process of claim 1 wherein reactive component A comprises a material having functional groups that are reactive with active hydrogens, and reactive component B comprises:

(a) a thioether-functional, oligomeric polythiol prepared by reacting together:

(1) a compound having at least two thiol functional groups;
(2) a compound having triple bond functionality; and optionally
(3) a compound having at least two double bonds;

(b) an organotin catalyst present in an amount less than 300 ppm and a tertiary amine catalyst present in an amount less than 1000 ppm, based on the total weight of the reaction mixture; and, optionally
(c) a compound different from (a) containing active hydrogens.

**6.** The process of claim 5, wherein the reactive component A comprises a polyisocyanate, a blocked polyisocyanate, a polyisothiocyanate, a polyepoxide, a polyepisulfide, a polyacid, an anhydride, a polyanhydride, and/or a polyethylenically unsaturated material.

**7.** The process of claim 6, wherein the reactive component A comprises a diisocyanate or a mixture of a diisocyanate and a polyisocyanate having more than two isocyanate functional groups.

**8.** The process of claim 7, wherein the reactive component A comprises

- a mixture of a diisocyanate and a polyisocyanate having more than two isocyanate functional groups, wherein the polyisocyanate having more than two isocyanate functional groups is present in an amount up to 20 percent by weight of component A; or
- methylene bis(4-cyclohexyldiisocyanate), 1,3-bis(1-isocyanato-1-methylethyl)-benzene, m-xylylene diisocyanate, hexamethylene diisocyanate, 1,3-isocyanato methyl cyclohexane, and/or 3-isocyanato-methyl-3,5,5-trimethyl cyclohexyl-isocyanate.

**9.** The process of claim 5 wherein the compound (1) having at least two thiol functional groups comprises a dithiol, a compound having more than two thiol functional groups, or a mixture of a dithiol and a compound having more than two thiol functional groups.

**10.** The process of claim 9 wherein the compound (1) comprises a mixture of a dithiol and a compound having more than two thiol functional groups.

**11.** The process of claim 5 wherein

- the compound (1) having at least two thiol functional groups further contains hydroxyl functionality; or
- thiol functional groups in compound (1) are terminal groups ; or
- the compound (2) having triple bond functionality comprises propargyl alcohol, propargyl chloride, propargyl bromide, propargyl acetate, propargyl propionate, propargyl benzoate, phenyl acetylene, phenyl propargyl sulfide, 1,4-dichloro-2-butyne, 2-butyne-1,4-diol, 3-butyne-2-ol, 2-pentyne, 1-hexyne, 2-hexyne, 3-hexyne, 3-hexyne-2,5-diol, and/or mixtures thereof.

**12.** The process of claim 5, wherein the compound (3) having at least two double bonds is present and comprises acyclic non-conjugated dienes, acyclic polyvinyl ethers, allyl-(meth)acrylates vinyl-(meth)acrylates, di(meth)acrylate esters of diols, di(meth)acrylate esters of dithiols, di(meth)acrylate esters of poly(alkyleneglycol) diols, monocyclic non-aromatic dienes, polycyclic non-aromatic dienes, aromatic ring-containing dienes, diallyl esters of aromatic ring dicarboxylic acids, and/or divinyl esters of aromatic ring dicarboxylic acids.

**13.** The process of claim 12, wherein the compound (3) having at least two double bonds comprises 5-vinyl-2-norbornene, ethylene glycol divinyl ether, diethylene glycol divinyl ether, triethylene glycol divinyl ether, butane diol divinyl ether, vinylcyclohexene, 4-vinyl-1-cyclohexene, dipentene, terpinene, dicyclopentadiene, cyclododecadiene, cyclooctadiene, 2-cyclopenten-1-yl-ether, 2,5-norbornadiene, divinylbenzene, diisopropenylbenzene, allyl (meth)acrylate, ethanediol di(meth)acrylate, 1,3-propanediol di(meth)acrylate, 1,2-propanediol di(meth)acrylate, 1,4-butanediol di(meth)acrylate, 1,3-butanediol di(meth)acrylate, 1,2-butanediol di(meth)acrylate, ethylene glycol di(meth)acrylate, diethylene glycol di(meth)acrylate, 2,2'-thioethanedithiol di(meth)acrylate, and/or 1,2-ethanedithiol di(meth)acrylate.

**14.** The process of claim 5, wherein the compound (c) is present and comprises a compound having at least two active hydrogen-containing groups comprising primary amine groups, secondary amine groups, hydroxyl groups, and/or thiol groups.

**15.** The process of claim 14, wherein the compound (c) comprises diethyltoluenediamine and/or a compound having at least two thiol functional groups.

## Patentansprüche

1. **1.** Verfahren zur Herstellung eines geformten optischen Gegenstands, der im Wesentlichen frei von optischen Defekten ist, wobei dieses Verfahren umfasst:

   a) Einbringen je eines von zwei separaten reaktiven Komponenten A und B aus separaten Versorgungsgefäßen in eine Mischkammer mit einem Volumen von 200 ml bis 2000 ml,
   b) Zusammenmischen der Komponenten in der Mischkammer für einen Zeitraum von 50 bis 200 s, um eine Reaktionsmischung zu bilden,
   c) Injizieren der Reaktionsmischung bei einer Temperatur von bis zu 130 °C in eine Form,
   d) Halten der Reaktionsmischung in der Form bei einer Temperatur und für einen Zeitraum, die ausreichend sind, um die Reaktionsmischung im Wesentlichen zu härten und einen geformten optischen Gegenstand zu bilden, und
   e) Entfernen des Gegenstands aus der Form.

**2.** Verfahren nach Anspruch 1, wobei

- die Mischkammer ein Volumen von 200 ml bis 300 ml aufweist oder
- die Komponenten in der Mischkammer für einen Zeitraum von wenigstens 70 s zusammengemischt werden oder
- die Reaktionsmischung in die Form bei einer Temperatur von bis zu 120 °C injiziert wird.

**3.** Verfahren nach Anspruch 1, wobei die Form eine Linsenform ist.

**4.** Verfahren nach Anspruch 3, wobei die Form eine Augenlinsenform ist.

**5.** Verfahren nach Anspruch 1, wobei die reaktive Komponente A ein Material mit funktionellen Gruppen enthält, die mit aktiven Wasserstoffatomen reaktiv sind, und die reaktive Komponente B

(a) ein thioetherfunktionelles oligomeres Polythiol, hergestellt durch Miteinanderumsetzen von:

(1) einer Verbindung mit wenigstens zwei thiolfunktionellen Gruppen,
(2) einer Verbindung mit Dreifachbindungsfunktionalität und optional
(3) einer Verbindung mit wenigstens zwei Doppelbindungen,

(b) einen Organozinnkatalysator, der in einer Menge von weniger als 300 ppm vorhanden ist, und einen tertiären Aminkatalysator, der in einer Menge von weniger als 1000 ppm vorhanden ist, bezogen auf das Gesamtgewicht der Reaktionsmischung, und optional
(c) eine Verbindung, die sich von (a) unterscheidet und aktive Wasserstoffatome aufweist,

enthält.

**6.** Verfahren nach Anspruch 5, wobei die reaktive Komponente A ein Polyisocyanat, ein blockiertes Polyisocyanat, ein Polyisothiocyanat, ein Polyepoxid, ein Polyepisulfid, eine Polysäure, ein Anhydrid, ein Polyanhydrid und/oder ein polyethylenisch ungesättigtes Material enthält.

**7.** Verfahren nach Anspruch 6, wobei die reaktive Komponente A ein Diisocyanat oder eine Mischung eines Diisocyanats und eines Polyisocyanats mit mehr als zwei isocyanatfunktionellen Gruppen enthält.

**8.** Verfahren nach Anspruch 7, wobei die reaktive Komponente A

- eine Mischung aus einem Diisocyanat und einem Polyisocyanat mit mehr als zwei isocyanatfunktionellen Gruppen, wobei das Polyisocyanat mit mehr als zwei isocyanatfunktionellen Gruppen in einer Menge von bis zu 20 Gew.-% der Komponente A vorhanden ist, oder
- Methylen-bis-(4-cyclohexyldiisocyanat), 1,3-Bis-(1-isocyanato-1-methylethyl)benzol, m-Xyloldiisocyanat, Hexamethylendiisocyanat, 1,3-Isocyanatomethylcyclohexan und/oder 3-Isocyanatomethyl-3,5,5-trimethylcyclohexylisocyanat

enthält.

**9.** Verfahren nach Anspruch 5, wobei die Verbindung (1) mit wenigstens zwei thiolfunktionellen Gruppen ein Dithiol, eine Verbindung mit mehr als zwei thiolfunktionellen Gruppen oder eine Mischung eines Dithiols und einer Verbindung mit mehr als zwei thiolfunktionellen Gruppen enthält.

**10.** Verfahren nach Anspruch 9, wobei die Verbindung (1) eine Mischung eines Dithiols und einer Verbindung mit mehr als zwei thiolfunktionellen Gruppen enthält.

**11.** Verfahren nach Anspruch 5, wobei

- die Verbindung (1) mit wenigstens zwei thiolfunktionellen Gruppen zusätzlich Hydroxylfunktionalität enthält oder
- die thiolfunktionellen Gruppen in Verbindung (1) endständige Gruppen sind oder
- die Verbindung (2) mit Dreifachbindungsfunktionalität Propargylalkohol, Propargylchlorid, Propargylbromid, Propargylacetat, Propargylpropionat, Propargylbenzoat, Phenylacetylen, Phenylpropargylsulfid, 1,4-Dichlor-2-butin, 2-Butin-1,4-diol, 3-Butin-2-ol, 2-Pentin, 1-Hexin, 2-Hexin, 3-Hexin, 3-Hexin-2,5-diol und/oder Mischungen davon enthält.

**12.** Verfahren nach Anspruch 5, wobei die Verbindung (3) mit wenigstens zwei Doppelbindungen vorhanden ist und acyclische nicht konjugierte Diene, acyclische Polyvinylether, Allyl(meth)acrylate, Vinyl(meth)acrylate, Di(meth)acrylatester von Diolen, Di(meth)acrylatester von Dithiolen, Di(meth)acrylatester von Poly(alkylenglykol)diolen, monocyclische nichtaromatische Diene, polycyclische nichtaromatische Diene, aromatische ringhaltige Diene, Diallylester von aromatischen Ringdicarbonsäuren und/oder Divinylester von aromatischen Ringdicarbonsäuren umfasst.

**13.** Verfahren nach Anspruch 12, wobei die Verbindung (3) mit wenigstens zwei Doppelbindungen 5-Vinyl-2-norbornen, Ethylenglykoldivinylether, Diethylenglykoldivinylether, Triethylenglykoldivinylether, Butandioldivinylether, Vinylcyclohexen, 4-Vinyl-1-cyclohexen, Dipenten, Terpinen, Dicyclopentadien, Cyclododecadien, Cyclooctadien, 2-Cyclopenten-1-yl-ether, 2,5-Norbornadien, Divinylbenzol, Diisopropenylbenzol, Allyl(meth)acrylat, Ethandioldi(meth)acrylat, 1,3-Propandioldi(meth)acrylat, 1,2-Propandioldi(meth)acrylat, 1,4-Butandioldi(meth)acrylat, 1,3-Butandioldi(meth)acrylat, 1,2-Butandioldi(meth)acrylat, Ethylenglykoldi(meth)acrylat, Diethylenglykoldi(meth)acrylat, 2,2'-Thioethandithioldi(meth)acrylat und/oder 1,2-Ethandithioldi(meth)acrylat umfasst.

**14.** Verfahren nach Anspruch 5, wobei die Verbindung (c) vorhanden ist und eine Verbindung mit wenigstens zwei aktiven Wasserstoff enthaltenden Gruppen, umfassend primäre Amingruppen, sekundäre Amingruppen, Hydroxylgruppen und/oder Thiolgruppen, umfasst.

**15.** Verfahren nach Anspruch 14, wobei die Verbindung (c) Diethyltoluoldiamin und/oder eine Verbindung mit wenigstens zwei thiolfunktionellen Gruppen umfasst.

## Revendications

**1.** Procédé de préparation d'un article optique moulé ne présentant sensiblement pas de défaut optique, ledit procédé comprenant :

a) l'introduction de chacun de deux composants réactifs distincts A et B de cuves d'approvisionnement distinctes dans une chambre de mélange ayant un volume de 200 mL à 2 000 mL ;
b) le mélange des composants ensemble dans la chambre de mélange pendant une période de 50 à 200 secondes pour former un mélange réactionnel ;
c) l'injection du mélange réactionnel à une température pouvant atteindre jusqu'à 130 °C dans un moule ;
d) le maintien du mélange réactionnel dans le moule à une température et pendant une durée suffisantes pour sensiblement durcir le mélange réactionnel et former un article optique moulé ; et
e) la libération de l'article du moule.

**2.** Procédé selon la revendication 1, dans lequel

- la chambre de mélange a un volume de 200 mL à 300 mL ; ou

- les composants sont mélangés ensemble dans la chambre de mélange pendant une durée d'au moins 70 secondes ; ou
- le mélange réactionnel est injecté dans le moule à une température pouvant atteindre jusqu'à 120 °C.

**3.** Procédé selon la revendication 1, dans lequel le moule est un moule de lentille.

**4.** Procédé selon la revendication 3, dans lequel le moule est un moule de lentille ophtalmique.

**5.** Procédé selon la revendication 1, dans lequel le composant réactif A comprend un matériau ayant des groupes fonctionnels qui sont réactifs avec des atomes d'hydrogène actif, et le composant réactif B comprend :

(a) un polythiol oligomère à fonctionnalité thioéther préparé en mettant en réaction ensemble :

(1) un composé ayant au moins deux groupes fonctionnels thiol ;
(2) un composé ayant une fonctionnalité triple liaison ; et facultativement
(3) un composé ayant au moins deux doubles liaisons ;

(b) un catalyseur organostannique présent en une quantité inférieure à 300 ppm et un catalyseur amine tertiaire présent en une quantité inférieure à 1000 ppm, sur la base du poids total du mélange réactionnel ; et, facultativement
(c) un composé différent de (a) contenant des atomes d'hydrogène actif.

**6.** Procédé selon la revendication 5, dans lequel le composant réactif A comprend un polyisocyanate, un polyisocyanate bloqué, un polyisothiocyanate, un polyépoxyde, un polyépisulfure, un polyacide, un anhydride, un polyanhydride, et/ou un matériau polyéthyléniquement insaturé.

**7.** Procédé selon la revendication 6, dans lequel le composant réactif A comprend un diisocyanate ou un mélange d'un diisocyanate et d'un polyisocyanate ayant plus de deux groupes fonctionnels isocyanates.

**8.** Procédé selon la revendication 7, dans lequel le composant réactif A comprend

- un mélange d'un diisocyanate et d'un polyisocyanate ayant plus de deux groupes fonctionnels isocyanate, dans lequel le polyisocyanate ayant plus de deux groupes fonctionnels isocyanate est présent en une quantité pouvant atteindre jusqu'à 20 % en poids du composant A ; ou
- du méthylène bis(4-cyclohexyldiisocyanate), du 1,3-bis(1-isocyanato-1-méthyléthyl)-benzène, du diisocyanate de m-xylylène, du diisocyanate d'hexaméthylène, du 1,3-isocyanato méthyl cyclohexane, et/ou du cyclohexylisocyanate de 3-isocyanato-méthyl-3,5,5-triméthyle.

**9.** Procédé selon la revendication 5, dans lequel le composé (1) ayant au moins deux groupes fonctionnels thiol comprend un dithiol, un composé ayant plus de deux groupes fonctionnels thiol, ou un mélange d'un dithiol et d'un composé ayant plus de deux groupes fonctionnels thiol.

**10.** Procédé selon la revendication 9, dans lequel le composé (1) comprend un mélange d'un dithiol et d'un composé ayant plus de deux groupes fonctionnels thiol.

**11.** Procédé selon la revendication 5, dans lequel

- le composé (1) ayant au moins deux groupes fonctionnels thiol contient en outre une fonctionnalité hydroxyle ; ou
- les groupes fonctionnels thiol dans le composé (1) sont des groupes terminaux ; ou
- le composé (2) ayant une fonctionnalité triple liaison comprend l'alcool propargylique, le chlorure de propargyle, le bromure de propargyle, l'acétate de propargyle, le propionate de propargyle, le benzoate de propargyle, le phénylacétylène, le sulfure de phénylpropargyle, le 1,4-dichloro-2-butyne, le 2-butyne-1,4-diol, le 3-butyne-2-ol, le 2-pentyne, le 1-hexyne, le 2-hexyne, le 3-hexyne, le 3-hexyne-2,5-diol, et/ou leurs mélanges.

**12.** Procédé selon la revendication 5, dans lequel le composé (3) ayant au moins deux doubles liaisons est présent et comprend des diènes non conjugués acycliques, des poly(vinyléthers) acycliques, des (méth)acrylate d'allyle, des (méth)acrylates de vinyle, des esters de di(méth)acrylate de diols, des esters de di(méth)acrylate de dithiols, des

esters de di(méth)acrylate de poly(alkylèneglycol)diols, des diènes non aromatiques monocycliques, des diènes non aromatiques polycycliques, des diènes contenant au moins un cycle aromatique, des esters de diallyle d'acides dicarboxyliques à cycle aromatique, et/ou des esters de divinyle d'acides dicarboxyliques à cycle aromatique.

**13.** Procédé selon la revendication 12, dans lequel le composé (3) ayant au moins deux doubles liaisons comprend le 5-vinyl-2-norbornène, l'éther divinylique d'éthylène glycol, l'éther divinylique de diéthylène glycol, l'éther divinylique de triéthylène glycol, l'éther divinylique de butane diol, le vinylcyclohéxène, le 4-vinyl-1-cyclohéxène, le dipentène, le terpinène, le dicylopentadiène, le cyclododécadiène, le cyclooctadiène, le 2-cyclopentén-1-yl-éther, le 2,5-norbornadiène, le divinylbenzène, le diisopropénylbenzène, le (méth)acrylate d'allyle, le di(méth)acrylate d'éthanediol, le di(méth)acrylate de 1,3-propanediol, le di(méth)acrylate de 1,2-propanediol, le di(méth)acrylate de 1,4-butanediol, le di(méth)acrylate de 1,3-butanediol, le di(méth)acrylate de 1,2-butanediol, le di(méth)acrylate d'éthylène glycol, le di(méth)acrylate de diéthylène glycol, le di(méth)acrylate de 2,2'-thioéthanedithiol, et/ou le di(méth)acrylate de 1,2-éthanedithiol.

**14.** Procédé selon la revendication 5, dans lequel le composé (c) est présent et comprend un composé ayant au moins deux groupes contenant des atomes d'hydrogène actif comprenant des groupes amine primaire, des groupes amine secondaire, des groupes hydroxyle, et/ou des groupes thiol.

**15.** Procédé selon la revendication 14, dans lequel le composé (c) comprend une diéthyltoluènediamine et/ou un composé ayant au moins deux groupes fonctionnels thiol.

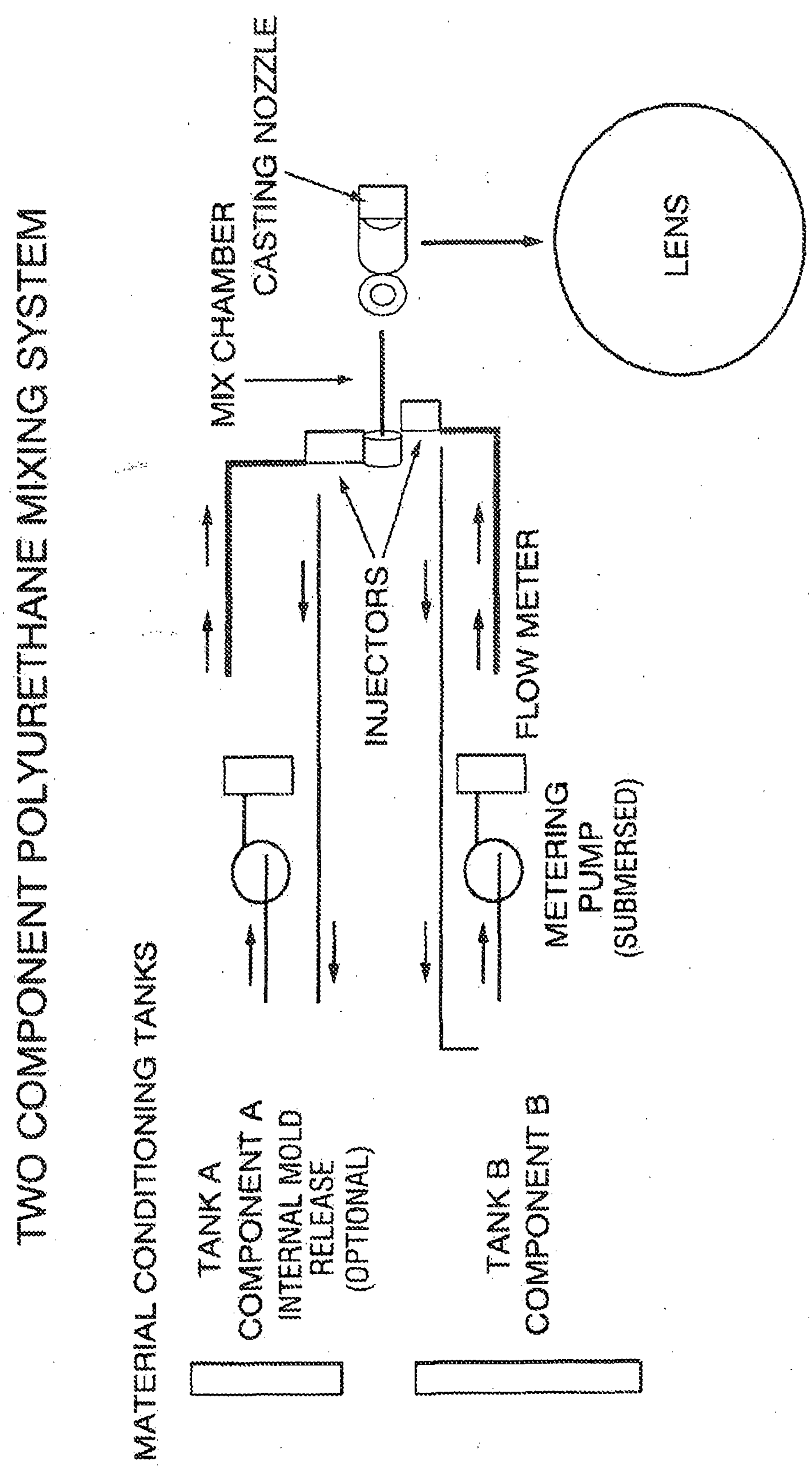
TWO COMPONENT POLYURETHANE MIXING SYSTEM
MATERIAL CONDITIONING TANKS
TANK A
COMPONENT A
INTERNAL MOLD
RELEASE
(OPTIONAL)
TANK B
COMPONENT B
METERING
PUMP
(SUBMERSED)
INJECTORS
FLOW METER
MIX CHAMBER
CASTING NOZZLE
LENS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61449123 B
- US 7009032 B2
- US 6509418 B1
- WO 03042270 A
- WO 0166623 A1
- US 5369141 A
- US 5374668 A
- US 2324483 A
- US 5807975 A
- US 5693738 A


### Non-patent literature cited in the description


- Ullmann's Encyclopedia of Industrial Chemistry. 1992, vol. A21, 673-674